(19) Europäisches Patentamt
European Patent Office
Office européen des brevets

(11) **EP 3 367 290 A1**

(12) **EUROPEAN PATENT APPLICATION**

(43) Date of publication:
**29.08.2018 Bulletin 2018/35**

(51) Int Cl.:
***G06F 21/60*** (2013.01)

(21) Application number: **18158954.0**

(22) Date of filing: **27.02.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD TN**<br><br>(30) Priority: **27.02.2017 US 201762463874 P**<br><br>(71) Applicant: **AGT International GmbH**<br>**8050 Zurich (CH)** | (72) Inventors:<br>• **WIESMAIER, Alexander**<br>**64372 Ober-Ramstadt (DE)**<br>• **DAUBERT, Jorg**<br>**64295 Darmstadt (DE)**<br>• **FUNKE, Sebastian**<br>**64285 Darmstadt (DE)**<br><br>(74) Representative: **Taor, Simon Edward William et al**<br>**Venner Shipley LLP**<br>**200 Aldersgate**<br>**London EC1A 4HD (GB)** |

(54) **SYSTEMS, METHODS AND COMPUTER PROGRAM PRODUCTS FOR COMBINING PRIVACY ENHANCING TECHNOLOGIES**

(57)      A system configured to combine plural PETs, the system comprising a user interface operative to provide evaluations of each of plural raw aka known aka input PETs, in accordance with a PET taxonomy comprising a tree defining ordered and unordered dimensions comprising sub-trees along which PETs are classified; and a processor configured to automatically generate an evaluation of at least one composition of at least two of the plural raw PETs.

Fig. 5

**Description**

REFERENCE TO CO-PENDING APPLICATIONS

Priority is claimed from US provisional application No. 62/463,874, entitled **End Privacy Architecture for IoT** and filed on 27 February, 2017, the disclosure of which application is hereby incorporated by reference.

FIELD OF THIS DISCLOSURE

The present invention relates generally to software, and more particularly to analytics software such as IoT (internet of things) analytics.

BACKGROUND FOR THIS DISCLOSURE

Conventional PET (Privacy Enhancing Technology) and Privacy Model technologies are described in the following references A - F:

[A] Johannes Heurix, Peter Zimmermann, Thomas Neubauer, and Stefan Fenz. 2015. A taxonomy for privacy enhancing technologies. Computers & Security 53 (2015), 1 - 17.

[B] Andreas Pfitzmann and Marit Hansen. 2008. Anonymity, Unlinkability, Undetectability, Unobservability, Pseudonymity, and Identity Management - A Consolidated Proposal for Terminology. (2008).

[C] Jens-Matthias Bohli and Andreas Pashalidis. 2011. Relations Among Privacy Notions. ACM Trans. Inf. Syst. Secur. 14, 1, Article 4 (June 2011), 24 pages.

[D] Michael Backes, Aniket Kate, Praveen Manoharan, Sebastian Meiser, and Esfandiar Mohammadi. 2013. AnoA: A framework for analyzing anonymous communication protocols. In Computer Security Foundations Symposium (CSF), 2013 IEEE 26th. IEEE, 163-178.

[E] Naipeng Dong, Hugo Jonker, and Jun Pang. 2013. Enforcing privacy in the presence of others: Notions, formalisations and relations. In Computer Security- ESORICS 2013. Springer, 499-516.

[F] Daniel Kifer and Ashwin Machanavajjhala. 2014. Pufferfish: A framework for mathematical privacy definitions. ACM Transactions on Database Systems (TODS) 39, 1 (2014), 3.

Privacy metrics for IT systems are known including sophisticated privacy metrics like entropy, indistinguishability and weighting of goal values.
Example PETs and application of privacy metrics thereto, are described in Funke et al, "Constrained PET Composition for Measuring Enforced Privacy", 2017, available on the Internet. Generally, what is to be achieved in terms of privacy is deemed a goal, whereas the technology used to achieve the goal/s is deemed a PET.
Other state of the art technologies are described in:

"PrivOnto: A semantic framework for the analysis of privacy policies", A Oltramari, D Piraviperumal, F Schaub et al, 2017, content.iospress.com

"PE-BPMN: Privacy-Enhanced Business Process Model and Notation", P Pullonen, R Matulevič ius, D Bogdanov - International Conference on ..., 2017 - Springer,

Tim de Klerk,"How to Measure Privacy: a Structured Overview of Analysis Methods for Privacy-Enhancing Technologies", and

Kimmo Halunen and Anni Karinsalo, "Measuring the value of privacy and the efficacy of PETs", Proceeding ECSA '17 Proceedings of the 11th European Conference on Software Architecture: Companion Proceedings, pp. 132-135, Canterbury, United Kingdom - September 11 - 15, 2017.

In this document henceforth, " PETs " is used to denote the plural of PET (Privacy Enhancing Technologies).
Privacy metrics for single PETs are known, such as Tor's set-based anonymity metric, and Delta-Privacy.

Privacy metrics are used in the field to measure the fulfillment of a specific privacy goal a PET has (e.g. Unlinkability for Tor's set-based anonymity metric. Differential privacy and k-anonymity measure how uniquely identifiable a user is who stores a data-record in a database of other records).

The disclosures of all publications and patent documents mentioned in the specification, and of the publications and patent documents cited therein directly or indirectly, are hereby incorporated by reference. Materiality of such publications and patent documents to patentability is not conceded.

SUMMARY OF CERTAIN EMBODIMENTS

Certain embodiments seek to provide a Privacy Enhancing Technologies (PETs) combiner system typically characterized by a set-based taxonomy and/or composition algebra where Privacy Enhancing Technologies (PETs) are intended to include any typically well-defined, typically domain-specific technology operative to preserve privacy in computerized systems and technologies such as but not limited to Intelligent Software Agents (ISAs), networks, human computer interfaces, public key infrastructures, cryptography and data mining and matching.

The combiner system may be characterized by all or any subset of the following characteristics:

Taxonomy

- Distinguish property (unordered) and capability (ordered) dimensions
- Introduce quantifiability concept

Model Definition

- Formalization of model as sets

- Instantiating quantifiability with finite or infinite spaces

    ◦ $\mathbb{N}$ for G

    ◦ {Full, Partial} for R

Algebra

- Making composition an algebra (commutative monoid)
- Composition with use-case specific constraints C
- Weakest link constraint W for G and R

Certain embodiments seek to enhance existing technologies such as but not limited to Heed, Heed verticals, Scale, CityMind, PBR, Smart Vehicles, with privacy features, in fields such as OTT content, (Social) IoT, or Smart Cities.

Certain embodiments seek to provide a domain-independent solution operative to provide privacy-enhanced services composed out of multiple PETs, including formally describing properties of the composed PET system especially for use cases where PETs are dynamically selected and change on the fly, e.g. by contextual policy driven infrastructures. Typically different PETs have different characteristics such as different scenarios, application domains, threat models, privacy goals etc. so, for example, when composing two PETs, PET1 on pseudonymity and PET2 on un-traceability, it is not necessarily the case that the resulting PET system preserves all properties of each the two individual PETs, PET1 and PET2. Instead, a weakness of one of the PETs, e.g. reversibility, may override the resilience of the other PET in the composed system.

Certain embodiments seek to provide technical solutions to all or any subset of the following problems:

a. How to formalize the characteristics of PETs
b. How to formally compose PETs with different characteristics
c. How to derive a privacy metric for IT systems that are using composed PETs
d. How to automate the computation of resulting PET characteristics and privacy index

Certain embodiments of the composer system enable enforcing a freely configurable balance between user privacy and service provider business goals. Typically, the system employs a formal, set-based and domain-independent taxonomy model for PETs, and/or an algebra for constrained composition of PETs. Typically, the system is operative for measurement of enforced privacy in service infrastructures.

Certain embodiments seek to provide a PET ecosystem, which would work similar to an online cell-app store (e.g. Apple AppStore / Google PlayStore), where contributors can curate values assigned to PETs.

Certain embodiments seek to provide a system and method for fulfilling multiple privacy requirements or goals (e.g. unlinkability + confidentiality + awareness) including combining multiple raw or individual or basic PETs (for each of which, a formal definition of which privacy requirements are covered by that raw PET is available) and generating, computationally, a formal definition of which privacy requirements are and are not covered by this combination, since certain requirements might be perturbed by certain PET combination choices (e.g. if weak attributes taint stronger ones) which would, absent the system and methods shown and described herein, be unknown.

Certain embodiments are also applicable to areas of context other than privacy benefitting from formal building block composition, such as but not limited to (a) data analytics, where analytic modules, rather than PTEs are combined, e.g. into an analytics chain. and (b) business workflows, where workflow operations, rather than PETs, may be combined into a workflow, e.g. chain of workflow operations.

When implementing these and other examples, fields and/or values of the taxonomy shown and described herein may be augmented or removed, and/or labels may be changed to labels meaningful in the analytics context and/or dimensions may be suitably classified, not necessarily as classified herein merely by way of example, as either properties or capabilities (or hybrid). Also, constrained unions may, if deemed useful, be suitably defined.

At least the following embodiments are thus provided:

Embodiment 1. A system configured to combine plural PETs, the system comprising:

I. A user interface operative to provide evaluations of each of plural raw aka known aka input PETs, in accordance with a PET taxonomy comprising a tree defining ordered and unordered dimensions comprising sub-trees along which PETs are classified; and

Ii. A processor configured to automatically generate an evaluation of at least one composition of at least two of the plural raw PETs.

It is appreciated that the taxonomy (and associated algebra) may if desired be based on graphs generally, rather than, necessarily, on a tree.

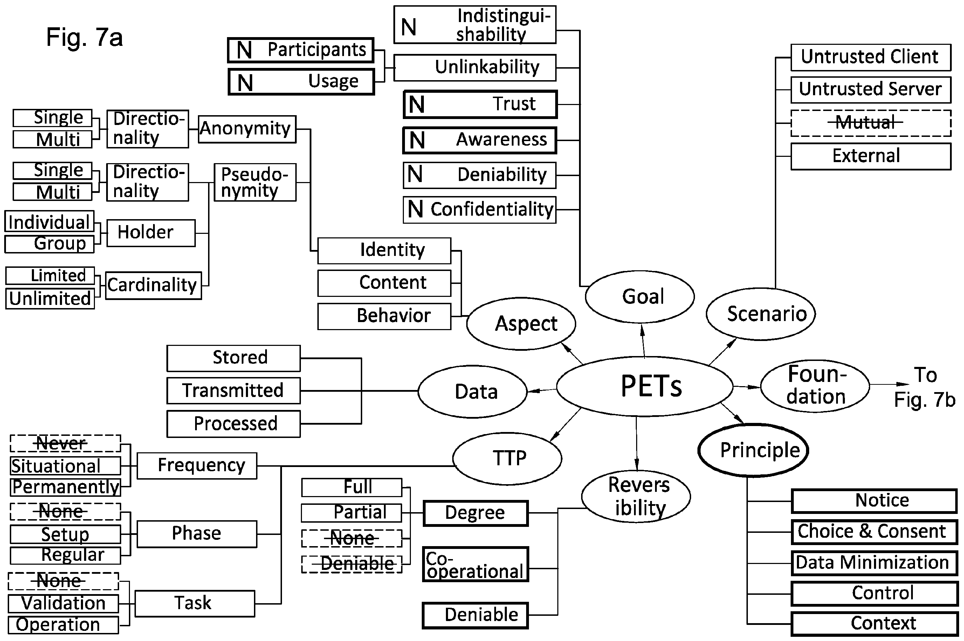

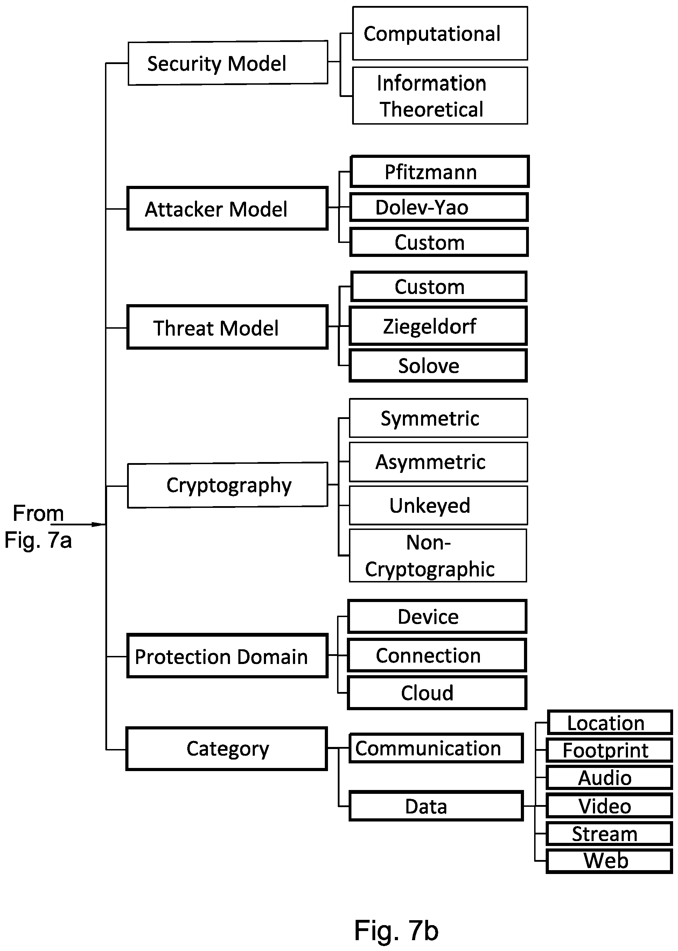

The " taxonomy" may for example include any PET taxonomy which includes (a) dimensions, e.g. some or all of the dimensions of the taxonomy of Figs. 7a and 7b, taken together, and/or (b) treats some dimensions aka properties as unordered and others aka capabilities as ordered. Some or all capabilities may be quantified over infinite sets, such as the set of all natural numbers, rational numbers or irrational numbers e.g. In the illustrated example, Goals are quantified over the natural numbers. Some or all capabilities may be quantified over finite sets, e.g. in the illustrated example, Reversibility degree is ordered over {full, partial}.

Typically, Reversibility (by way of example) is not inherently ordered over {full, partial}, and instead the order is introduced by the respective constrained set union that treats (say) "full" as bigger than "partial".

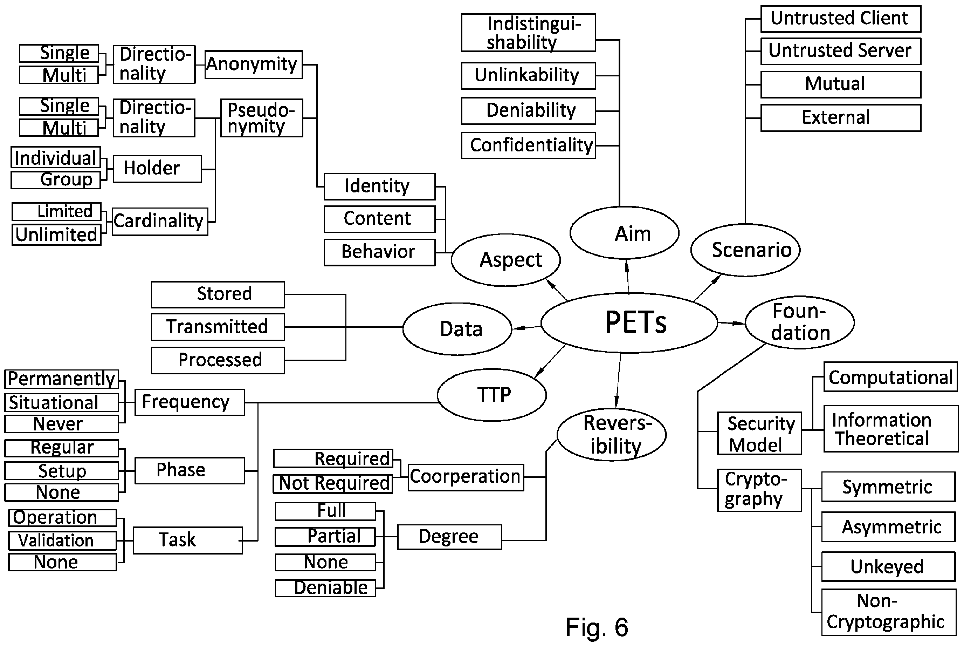

It is appreciated that the taxonomy of Figs. 7a and 7b, taken together is an example taxonomy including 8 dimensions abbreviated a g s f p r t d respectively, each typically having descendant nodes including child (aka son) nodes. However, alternatively, more or less dimensions may be provided. For example, any one or more of the dimension sub-trees of Figs. 7a and 7b, taken together may be omitted. Typically all of the dimensions of Figs. 7a and 7b, taken together, or any subset thereof, may be provided. Furthermore, the taxonomy of Fig. 6 may be employed, minus the Reversibility sub-tree and given a formalization of the taxonomy as sets. Alternatively, more or less dimensions may be provided to the taxonomy of Fig. 6. For example, any one or more of the dimension sub-trees of Fig. 6 may be omitted.

A particular advantage of the taxonomy ("s3") of Figs. 7a and 7b, taken together as opposed to the Heurix et al state of the art taxonomy is that Heurix et al does not differentiate properties vs. capabilities and instead, all Heurix' attributes are treated equal.

It is appreciated that, as exemplified by the mixed Reversibility dimension, dimension/s in Figs. 7a - 7b may be hybrid - neither pure property nor pure capability. For example, in the Reversibility dimension in Figs. 7a - 7b, "Degree" is a capability, while "Co-operational" and "Deniable" are properties. More generally, dimensions may be properties, capabilities or mixed aka hybrid.

One use-case of the above system is as a middleware-component aka privacy middleware in a service-provisioning chain, which adds privacy features to usage of the services. Some or all of the services themselves may be agnostic to the existence of the PAPI system shown and described herein.

Each service typically stores and processes end users' data. The privacy features may comprise privacy goals of PETs in the middleware such as, say, Unlinkability, Confidentiality, Indistinguishability (or may comprise other PET dimensions such as Aspects, Foundation, etc.).

Typically, the PET Descriptions are provided by the middleware that may derive suitable PETs to use from a negotiated policy. The Configuration descriptions may then be delivered either at setup time or later during maintenance

## EP 3 367 290 A1

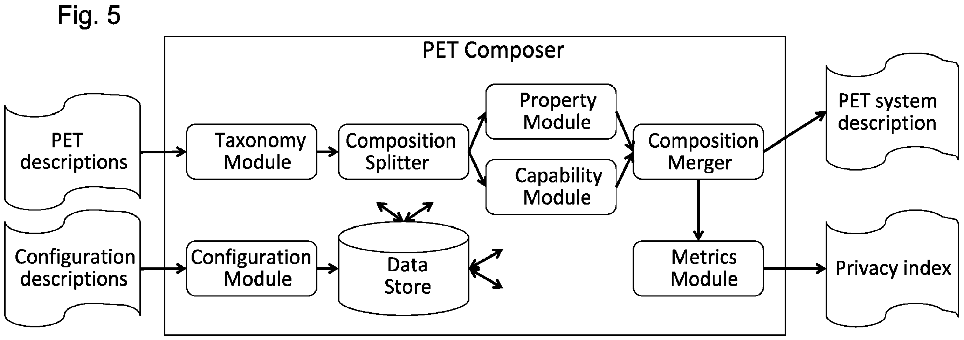

by the system administrator. A PET system description, representing a PET system currently employed, may be delivered back to the middleware. The privacy metric if generated by the system of Fig. 5 may be fed to the privacy middleware, thereby to indicate the level of privacy that has been achieved. Both of these outputs, or either one, may be presented to the end user and/or service via a suitable user interface, to inform them of applied privacy measures. In this use case, Service-providers (for a service aware of the middleware) may use the middleware to fulfill compliance requirements (GDPR). In this case the service provider may provide its policies directly to the middleware to be used there or there may be a one-to-one mapping between middleware policies and service policies.

Other mappings are possible, e.g. one policy of the middleware may represent multiple policies in the service or vice versa, one policy of the service may represent multiple policies in the middleware.

Another use case in which the service provider is aware of the middleware is when the service provider incorporates the PAPI backend into the service provider's system, being directly responsible for some or all of its operation, policies, PETs.

Alternatively, however, the service providers may be agnostic to or unaware of the existence of the privacy middleware in which case policy may be negotiated between a PAPI client (e.g. on the mobile phone) and a PAPI backend (e.g. in the Cloud), e.g. as described herein. The PAPI backend then ensures that the PAPI policies match the policies of the various services' providers. Typically, negotiation is not directly with the end-user, but rather with the end-user's device (which has PAPI installed). The end-user may, once or on occasion, select a subset of policies (from a given set of policies which may be presented e.g. as a list, via a suitable user interface) that s/he may agree to. This set of policies may then (typically automatically and in the background) be compared to the set of policies that are accepted by the service provider. If a matching policy is found (a policy both selected by the end-user and accepted by the service provider), that matching policy is selected. Otherwise, typically, the user either does not use the service or selects/is prompted to select more or other policies from the given set of policies. The given set of policies may for example be preinstalled with the client side PAPI installation. Alternatively or in addition, users may create their own policies. Also, policies may be exchanged with other users/ in a community of users.

Embodiment 2. A system according to any of the embodiments herein wherein the taxonomy is formalized using nested sets, thereby to generate a set-based formalized taxonomy in which each PET comprises a set of attributes each represented by a set of possible values and wherein at least one possible value itself comprises a set.

Embodiment 3. A system according to any of the embodiments herein wherein the taxonomy defines privacy dimensions aka attributes and defines quantifiability of at least one dimension aka capability from among the dimensions where quantifiability comprises assigning one of at least 2 (or even 3 degrees) or levels of strength to a capability. Quantifiability allows plural degrees or levels of fulfillment or existence of a given attribute, in a given PET or other data operator, to be represented. For example petl may be characterized by a high degree of reversibility whereas pet2 and pet3 have low and medium degrees of reversibility, respectively.

Embodiment 4. A system according to any of the embodiments herein wherein the quantifiability of at least one dimension of the taxonomy uses at least one of the N, Q or R sets where R = real numbers, Q= rational numbers, N = natural numbers.

For example, the set N of natural numbers may be used for the G dimension of Figs. 7a and 7b, taken together. Sets are typically infinite and may be either discrete (e.g. N) or continuous (e.g. R).

It is appreciated that there is no need for the sets of quantifiers to be numbers at all. E.g. the set of all possible words over the 26 letters A - Z is infinite, well defined and even has an inherent (lexicographic) order. Note that "word" need not be a word in any natural language and may instead be any combination of arbitrary letters in arbitrary order and of arbitrary length where each letter may appear any number of times. Example words being: A, AA, AAA, ..., AB, ABA, ABAA, ..., ABB, ABA, etc.

Even if the quantifiers are not numbers the quantifiers still may be used for the algebra e.g. by defining a one-to-one (bijective) mapping between the given set and a number set. E.g. the set of words defined above may be mapped to the natural numbers by interpreting the words as numbers in a p-adic system where p = 26 as is known in the art.

Embodiment 5. A system according to any of the embodiments herein wherein the quantifiability of at least one dimension of the taxonomy uses a set with a finite number of elements.

For example, the {Full, Partial} set (number of elements = 2) or any other finite set may be used for the R dimension of Figs. 7a and 7b, taken together.

It is appreciated that if there is no "natural" or intuitive order on the elements of the set, an order may be defined within the algebra to allow comparison and /or constrained set union.

Embodiment 6. A system according to any of the embodiments herein wherein the processor uses an algebra, for composition of the plural PETs, which is defined on the formalized taxonomy.

In privacy, reversibility is "undesirable" typically e.g. worse the higher its level is, i.e. full reversibility is bad for privacy while no reversibility is good for privacy i.e. it is typically not desirable for privacy measures to be reversible.

It is appreciated that it is not necessarily the case that the resulting PET system preserves all properties of each the two individual PETs, petl and pet2. Instead, a weakness of one of the PETS, e.g. High reversibility, may override the resilience of the other PET in the composed system. This situation in which weaker attributes override stronger ones is an example of constrained composition or constrained union. The weakest link composition shown and described herein guarantees that the resulting PET system is "at least as strong as its weakest link" e.g. that a combined PET is at least as strong, along each dimension or along each capability, as the weakest value along that dimension or capability, possessed by any of the input PETs . Typically, weaker and stronger dimension d_w and d_s refer to dimensions whose strengths, for a given PET, are quantified as weaker and stronger respectively.

It is appreciated that other constrained compositions, other than weakest link composition shown and described herein, may be used, such as but not limited to:

A. Strongest link composition -- where, in the combined PETs formal description in terms of the taxonomy, strong attributes of the raw PETs survive whereas weaker attributes of the raw PETs are eliminated from the combined PET's description. Strongest link composition may be used for example if all the input PETs provide confidentiality by encrypting the content in a cascade, e.g. each PET p encrypts the complete payload of a previous PET p. Then, the strongest encryption from among the input PETs is the one that "matters" (that characterizes the combined PET).

B. Average goal strength composition -- where the strengths of identical goals are averaged e.g. by computing the arithmetical mean or other central tendency of the input strength. This constrained composition is not as "safe" as the weakest link composition because the actual strength of the composition may be lower than the average but this constrained composition may give a closer hence, in certain use-cases e.g. low-criticality use-cases, more useful estimation (or automatically generated evaluation) of the actual strength of the composition, relative to just using the minimum as a safe (especially in high- criticality use-cases) yet more inaccurate estimation (or automatically generated evaluation) of the actual strength of the composition.

Typically, the algebra automatically determines which attributes of individual PETs, petl and pet2 are preserved in the combined PET (the combination of petl and pet2) and which are not. Typically, the algebra achieves this by providing a suitable constrained union, e.g. the weakest link composition or strongest link composition or average goal strength composition, by way of example.

The embodiment described herein refers extensively to weakest link composition; other constrained unions may involve other methods for building the set unions such as but not limited to:

- Umin and Uto defined in the description and used for the weakest link composition.
- Umax may be derived from Umin by exchanging the min operator by the max operator in the given definition for Umin. Likewise Uot may be derived from Uto by swapping the terms partial and full in the given definition for Uto. Together they may be used to build the strongest link composition.
- Uavg (average) may be constructed from Umin by exchanging the min operator by the avg (average) operator in the given definition of Umin. This then constitutes the average goal strength composition (at least for up to 3 PETs) or at least an indication of the central tendency of the goal strength composition.
- Another constrained union is a cumulative union, where the respective (number) values are summed up.

Typically, constrained union is used only for capabilities and typically properties are just simple set unions without constraints.

Embodiment 7. A system according to any of the embodiments herein wherein the algebra automatically determines which attributes of raw PETs being combined, are preserved in a composition of the raw PETs by using at least one use-case specific constraint, introduced into the algebra thereby to allow for special composition behavior characterizing (or unique to) less than all use-cases.

For example, using at least one use-case specific constraint may include using a weakest link constraint W for G and R. For example, all attributes aka dimensions may be composed using ordinary set union other than, say, G and R. G, R dimensions may be composed using, respectively, special unions Umin and Uto.

A "use case specific constraint" typically comprises a constraint applying to a union of PETs or to a composition of PETs which, when applied, causes the composition of PETs to behave in a manner appropriate to only some use cases. For example, in some use-cases but not others, it may be desired for each composition of PETs to be "as strong as the weakest link (as the weakest input PET)" along some or all dimensions of the taxonomy used to characterize the PETs.

Typically, constraint composition (such as, for example, the weakest or strongest link composition) is operative assuming a taxonomy which has capabilities. For example, in the example embodiment described herein, constrained composition is defined only over capabilities whereas properties are composed by ordinary set unions. However, alternatively, constrained composition may be defined over properties, e.g. by transforming properties into capabilities i.e. making the properties quantifiable or defining an order on the individual attributes of a property. For example, for "scenario" define the following order: "untrusted client" < untrusted server" < "external". Then, put a min or max constrain on the union.

It is appreciated that constrained compositions may be defined as being affected by plural dimensions / attributes rather than just one, e.g., say, security model "computational" overrides security goal "confidentiality".

Typically, the weakest link constraint for G differs from the weakest link constraint for R. While for example for G the weakest link constraint operates over N using a minimum, on R a minimum is not used and instead, within the constrained union there may be a definition of which of the non-numerical values is considered smaller than the others.

Embodiment 8. A system according to any of the embodiments herein wherein the at least one use-case specific constraint comprises a Weakest link constraint W applied to at least one dimension of the taxonomy.

Embodiment 9. A system according to any of the embodiments herein wherein the Weakest link constraint W is applied to dimension G.

Embodiment 10. A system according to any of the embodiments herein wherein the Weakest link constraint W for dimension G comprises minimum goal strength composition (Umin).

Embodiment 11. A system according to any of the embodiments herein wherein the Weakest link constraint W is applied to dimension R.

Embodiment 12. A system according to any of the embodiments herein wherein the Weakest link constraint W for dimension R comprises maximum reversibility degree composition (Uto).

Embodiment 13. A system according to any of the embodiments herein wherein the system is also configured to compute a privacy metric, from the formalized taxonomy, which computes strength achieved by all goals (dimension) in the combined PET relative to the maximum achievable goal strength.

It is appreciated that with the given formula, the maximum number of goals constitutes the maximum achievable level of goal strength possible within the given taxonomy.

According to some embodiments, the privacy index is defined only over the goal dimension. According to other embodiments, the privacy index is defined, alternatively or in addition, over other capability dimension/s.

Typically the metric provides a formal indication of minimum privacy guarantees if a particular combination of PETs is used.

Embodiment 14. A system according to any of the embodiments herein wherein the algebra is a commutative monoid.

Embodiment 15. A system according to any of the embodiments herein wherein an attribute-value pair based representation is used in an API to exchange data by exporting data structures represented using the attribute-value pair based representation from the system.

Embodiment 16. A system according to any of the embodiments herein wherein the user interface imports PETs including data structures represented using an attribute-value pair based representation.

It is appreciated that use of an attribute-value pair based representation such as JSON or XML is but one possible technical solution to express a formalized taxonomy on a computer. JSON is suitable on the API level and also works within the program running on the processor. It is appreciated that many typically more efficient solutions other than JSON exist to represent sets in computer memory since many modern programming language have a concept of sets, hence may be utilized.

Embodiment 17. A system according to any of the embodiments herein wherein service providers' end-users respective digital privacy is adjusted automatically during service-usage by negotiating PET combination/s and/or configuration policies .

Typically, negotiation are conducted between PAPI on client side and PAPI server, typically after end users have selected privacy policies they deem appropriate.

Typically, each configuration policy comprises a combination of PETs derived by the middleware from a user's privacy policy or privacy requirements, which may have been defined by the end-user in the course of the end-user's registration to one or more services which store and process end users' data.

Embodiment 18. A method configured to combine plural data operators, the method comprising:

I. Providing evaluations of each of plural raw aka known aka input data operators, in accordance with a data operator taxonomy comprising a tree defining ordered and unordered dimensions comprising sub-trees along which data operators are classified; and

Ii. Providing a processor configured to automatically generate an evaluation of at least one composition of at least two of the plural raw data operators.

Tt is appreciated that the data operators may comprise any operation performed on data such as but not limited to PETs or analytics. In the illustrated embodiments, the data operators comprise PETs however fields and/or values of the taxonomy shown and described herein may be augmented or removed, and/or labels may be changed to labels meaningful in the analytics context. Once the taxonomy is thus modified, and dimensions suitably classified as either properties or capabilities, the system shown and described herein may be used to combine raw analytics modules into an analytics chain.

According to certain embodiments, the method is operative for checking for valid input before processing. For example, self-combining may be performed prior to combining data operators (say, combining PET A with PET B). In self-combining, the method may combine PET A with PET A into PET A' and combine PET B with PET B into PET B'. The method may then combine PET A' and PET B' to yield a result PET AB. This self-combining is advantageous in eliminating problems e.g. if individual PET descriptions are erroneous e.g. contain the same goal twice with the same or even different strength.

Alternatively or in addition, the Taxonomy Module of Fig. 5 checks for syntactic correctness of the input, such as malformed structures or empty values. In case of violation, the taxonomy module may reject the input with an error message on protocol level. For example if the protocol being used is HTTP, instead of responding "200" (ok) as a direct response to an API call within the HTTP protocol, ack'ing receipt of the API call, the response may be "400" (bad request). Other conventional response codes e.g. as per https://tools.ietf.org/html/rfc7231 may be implemented, within HTTP or any other known alternative protocol.

Embodiment 19. A method according to any of the embodiments herein wherein the data operators comprise PETs.

Embodiment 20. A system according to any of the embodiments herein wherein the tree also comprises at least one hybrid dimension which is neither purely ordered nor purely unordered and or quantified or not quantified.

Embodiment 21. A system according to any of the embodiments herein and also comprising a Combination Builder.

Embodiment 22. A computer program product, comprising a non-transitory tangible computer readable medium having computer readable program code embodied therein, the computer readable program code adapted to be executed to implement a method configured to combine plural data operators, the method comprising:

I. Providing a user interface operative to provide evaluations of each of plural raw aka known aka input data operators, in accordance with a data operator taxonomy comprising a tree defining ordered and unordered dimensions comprising sub-trees along which data operators are classified; and

II. Providing a processor configured to automatically generate an evaluation of at least one composition of at least two of the plural raw data operators.

A particular advantage of certain embodiments is that a new or legacy technology in fields such as OTT content or (Social) IoT may be conveniently provided with tailored privacy features.

According to certain embodiments, privacy goals such as but not limited to some or all of the following goals: Unlinkability, Indistinguishability, Confidentiality, Deniability, Trust-establishment, Awareness), are embedded in a privacy policy engine, and map to real-world privacy problems such as but not limited to Tracking/profiling of users, disclosure of sensitive data, mistrust due to intransparency, in any information communication technology (ICT). According to certain embodiments, privacy goals may be enforced not only by "raw" PETs but also or alternatively by a combination of those "raw" privacy-preserving/enhancing technologies (PETs) that may be combined based on a policy that is specific to the service/ICT. This yields a computerized system that effectively maintains privacy of data stored therein or transmitted thereby.

Also provided, excluding signals, is a computer program comprising computer program code means for performing any of the methods shown and described herein when the program is run on at least one computer; and a computer program product, comprising a typically non-transitory computer-usable or -readable medium e.g. non-transitory computer -usable or -readable storage medium, typically tangible, having a computer readable program code embodied therein, the computer readable program code adapted to be executed to implement any or all of the methods shown and described herein. The operations in accordance with the teachings herein may be performed by at least one computer specially constructed for the desired purposes or a general purpose computer specially configured for the desired purpose by at least one computer program stored in a typically non-transitory computer readable storage medium. The term "non-transitory" is used herein to exclude transitory, propagating signals or waves, but to otherwise include any volatile or non-volatile computer memory technology suitable to the application.

Any suitable processor/s, display and input means may be used to process, display e.g. on a computer screen or other computer output device, store, and accept information such as information used by or generated by any of the methods and apparatus shown and described herein; the above processor/s, display and input means including computer programs, in accordance with some or all of the embodiments of the present invention. Any or all functionalities of the invention shown and described herein, such as but not limited to operations within flowcharts, may be performed by any one or more of: at least one conventional personal computer processor, workstation or other programmable device or computer or electronic computing device or processor, either general-purpose or specifically constructed, used for processing; a computer display screen and/or printer and/or speaker for displaying; machine-readable memory such as optical disks, CDROMs, DVDs, BluRays, magnetic-optical discs or other discs; RAMs, ROMs, EPROMs, EEPROMs, magnetic or optical or other cards, for storing, and keyboard or mouse for accepting. Modules shown and described herein may include any one or combination or plurality of: a server, a data processor, a memory/computer storage, a communication interface, a computer program stored in memory/computer storage.

The term "process" as used above is intended to include any type of computation or manipulation or transformation of data represented as physical, e.g. electronic, phenomena which may occur or reside e.g. within registers and /or memories of at least one computer or processor. Use of nouns in singular form is not intended to be limiting; thus the term processor is intended to include a plurality of processing units which may be distributed or remote, the term server is intended to include plural typically interconnected modules running on plural respective servers, and so forth.

The above devices may communicate via any conventional wired or wireless digital communication means, e.g. via a wired or cellular telephone network or a computer network such as the Internet.

The apparatus of the present invention may include, according to certain embodiments of the invention, machine readable memory containing or otherwise storing a program of instructions which, when executed by the machine, implements some or all of the apparatus, methods, features and functionalities of the invention shown and described herein. Alternatively or in addition, the apparatus of the present invention may include, according to certain embodiments of the invention, a program as above which may be written in any conventional programming language, and optionally a machine for executing the program such as but not limited to a general purpose computer which may optionally be configured or activated in accordance with the teachings of the present invention. Any of the teachings incorporated herein may, wherever suitable, operate on signals representative of physical objects or substances.

The embodiments referred to above, and other embodiments, are described in detail in the next section.

Any trademark occurring in the text or drawings is the property of its owner and occurs herein merely to explain or illustrate one example of how an embodiment of the invention may be implemented.

Unless stated otherwise, terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining", "providing", "accessing", "setting" or the like, refer to the action and/or processes of at least one computer/s or computing system/s, or processor/s or similar electronic computing device/s or circuitry, that manipulate and/or transform data which may be represented as physical, such as electronic, quantities e.g. within the computing system's registers and/or memories, and/or may be provided on-the-fly, into other data which may be similarly represented as physical quantities within the computing system's memories, registers or other such information storage, transmission or display devices or may be provided to external factors e.g. via a suitable data network. The term "computer" should be broadly construed to cover any kind of electronic device with data processing capabilities, including, by way of non-limiting example, personal computers, servers, embedded cores, computing system, communication devices, processors (e.g. digital signal processor (DSP), microcontrollers, field programmable gate array (FPGA), application specific integrated circuit (ASIC), etc.) and other electronic computing devices. Any reference to a computer, controller or processor is intended to include one or more hardware devices e.g. chips, which may be co-located or remote from one another. Any controller or processor may for example comprise at least one CPU, DSP, FPGA or ASIC, suitably configured in accordance with the logic and functionalities described herein.

The present invention may be described, merely for clarity, in terms of terminology specific to, or references to, particular programming languages, operating systems, browsers, system versions, individual products, protocols and the like. It will be appreciated that this terminology or such reference/s is intended to convey general principles of operation clearly and briefly, by way of example, and is not intended to limit the scope of the invention solely to a particular programming language, operating system, browser, system version, or individual product or protocol. Nonetheless, the disclosure of the standard or other professional literature defining the programming language, operating system, browser, system version, or individual product or protocol in question, is incorporated by reference herein in its entirety.

Elements separately listed herein need not be distinct components and alternatively may be the same structure. A statement that an element or feature may exist is intended to include (a) embodiments in which the element or feature exists; (b) embodiments in which the element or feature does not exist; and (c) embodiments in which the element or feature exist selectably e.g. a user may configure or select whether the element or feature does or does not exist.

Any suitable input device, such as but not limited to a sensor, may be used to generate or otherwise provide information received by the apparatus and methods shown and described herein. Any suitable output device or display may be used to display or output information generated by the apparatus and methods shown and described herein. Any suitable processor/s may be employed to compute or generate information as described herein and/or to perform functionalities described herein and/or to implement any engine, interface or other system described herein. Any suitable computerized data storage e.g. computer memory may be used to store information received by or generated by the systems shown and described herein. Functionalities shown and described herein may be divided between a server computer and a plurality of client computers. These or any other computerized components shown and described herein may communicate between themselves via a suitable computer network.

BRIEF DESCRIPTION OF THE DRAWINGS

Certain embodiments of the present invention are illustrated in the following drawings:

Figs. 1 to 4 are diagrams useful in understanding architectures provided in accordance with certain embodiments of the present invention which may be employed in conjunction with any of the embodiments of Figs. 5 to 7, 8a and 8b, and Fig. 9. Inter alia, Fig. 2 is a system overview with PAPI and Backend; Fig. 3 provides system details with PAPI and Backend, according to certain embodiments. The embodiment of Fig. 4 includes some or all of: wearable, PAPI, PAPI Backend and analytics cloud..

Figs. 5, 10 are diagrams of a PET composer system according to respective embodiments.

Fig. 6 is a prior art block diagram illustration of Heurix et al.'s [A] PET taxonomy where a letter or number in square brackets may be useful in referring the reader to a publication indicated by this letter or number elsewhere herein.

Figs. 7a - 7b, taken together, form a block diagram illustration of a taxonomy including modifications and extensions, indicated in bold, relative to the state of the art Heurix et al [20] PET taxonomy.

Figs. 8a-8b are tables useful in understanding certain embodiments. It is appreciated that Figs. 8a -8b need not necessarily be in table form. Alternatively, the example may be seen by filling in the values in the respective tables, for each attribute in Figs. 7a and 7b, taken together, which is used (since, as is seen, less than all of the attributes in Figs. 7a - 7b, are used in each example).

Fig. 9 is a table presenting dimensions, according to certain embodiments, of the PET taxonomy of Figs. 7a - 7b and optional verbal descriptions on how to utilize the dimensions in real-life use-cases.

Fig. 11 is a simplified flow diagram; some or all of the operations may be provided in any suitable order e.g. as shown.

Methods and systems included in the scope of the present invention may include some (e.g. any suitable subset) or all of the functional blocks shown in the specifically illustrated implementations by way of example, in any suitable order e.g. as shown.

Computational, functional or logical components described and illustrated herein can be implemented in various forms, for example, as hardware circuits such as but not limited to custom VLSI circuits or gate arrays or programmable hardware devices such as but not limited to FPGAs, or as software program code stored on at least one tangible or intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over several code sequences such as but not limited to objects, procedures, functions, routines and programs and may originate from several computer files which typically operate synergistically.

Arrows between modules may be implemented as APIs.

Each functionality or method herein may be implemented in software, firmware, hardware or any combination thereof. Functionality or operations stipulated as being software-implemented may alternatively be wholly or fully implemented by an equivalent hardware or firmware module and vice-versa. Firmware implementing functionality described herein, if provided, may be held in any suitable memory device and a suitable processing unit (aka processor) may be configured for executing firmware code. Alternatively, certain embodiments described herein may be implemented partly or exclusively in hardware in which case some or all of the variables, parameters, and computations described herein may be in hardware.

Any module or functionality described herein may comprise a suitably configured hardware component or circuitry e.g. processor circuitry. Alternatively or in addition, modules or functionality described herein may be performed by a general purpose computer or more generally by a suitable microprocessor, configured in accordance with methods shown and described herein, or any suitable subset, in any suitable order, of the operations included in such methods, or in accordance with methods known in the art. Any logical functionality described herein may be implemented as a real time application if and as appropriate and which may employ any suitable architectural option such as but not limited to FPGA, ASIC or DSP or any suitable combination thereof.

Any hardware component mentioned herein may in fact include either one or more hardware devices e.g. chips, which may be co-located or remote from one another.

Any method described herein is intended to include within the scope of the embodiments of the present invention also any software or computer program performing some or all of the method's operations, including a mobile application, platform or operating system e.g. as stored in a medium, as well as combining the computer program with a hardware device to perform some or all of the operations of the method.

Data may be stored on one or more tangible or intangible computer readable media stored at one or more different locations, different network nodes or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include apparatus which is primary, secondary, tertiary or off-line; which is of any type or level or amount or category of volatility, differentiation, mutability, accessibility, addressability, capacity, performance and energy use; and which is based on any suitable technologies such as semiconductor, magnetic, optical, paper and others.

DETAILED DESCRIPTION OF CERTAIN EMBODIMENTS

An example end to end privacy architecture for IoT is now described which may provide a privacy framework for IoTA (IoT analytics) platforms. There is thus provided architecture that combines one, all or any subset of the following:

- ◦ Policy Negotiator: Establishes contextual policy between service provider and service consumer
- ◦ Context Generator: Produces current context to be applied
- ◦ Context - Policy Resolver: Produces policy fitting the current context
- ◦ PET Composer and Configurator: Produces PET System
- ◦ Distributed Data Interceptor: Applies PET System

There is also provided according to an embodiment, a workflow design realizing one, all or any subset of the following:

- ◦ Configurable balance between privacy and business goals
- ◦ Context sensitive policy enforcement
- ◦ Composition of pluggable privacy components
- ◦ End-to-end domain coverage
- ◦ Making use of Dedicated Privacy Threat Model and/or
- ◦ Compositional Algebra

A particular advantage of certain embodiments is that the IoT privacy architecture described allows PETs to achieve privacy based on their existing solutions.

Policy determination may be based on policy context description matching to the context instance resolved for a data request.

Enforcement of multiple fine-grained privacy requirements may be provided.

The policy module typically distinguishes between context descriptions and context instances.

Typically, middleware is distributed to provide end-to-end privacy.

Policy enforcement is typically end-to-end distributed, not limited to access control, and policies are bound to context modalities.

Typically, privacy policies are bound to context modalities. Typically, enforcement mechanisms are end-to-end.

Typically, mechanisms are extensible to cover arbitrary privacy requirements.

A method and system for contextual policy based privacy enforcement using a distributed Privacy Enhancing Technology (PET) framework may be provided.

It is appreciated that a composed system may include two interacting modules: contextual privacy policies and privacy middleware.

Existing privacy solutions are tailored to a certain domain, bound to a certain context and work with hard-wired methods. In order to achieve both privacy and business goals simultaneously, a more flexible and reactive solution is described herein.

From IoT characteristics e.g., resource constrained heterogeneous device and protocol landscape and IoT middleware, the following are sought:

- Centralized PET discovery and management
- PET configuration management
- Data and annotation management
- Centralized policy management
- Context management
- Extensibility and modularity
- Service and PET interoperability
- Data format independence
- Usage and configuration transparency
- Contextual adaptability
- Scalability
- Security and trust
- End to end privacy
- Availability
- Reliability
- Usability
- Component deploy- and configurability
- Community popularity

The above are derived for (Social) IoT privacy, and an actual infrastructure that provides all of them, or alternatively any subset thereof, is described.

The architecture shown and described herein enhances privacy in service infrastructures end-to-end from devices (data source) to services (data sink) with distributed Privacy Enhancing Technology (PET) middleware. The middleware typically includes Privacy API (PAPI) and PAPI Backend components.

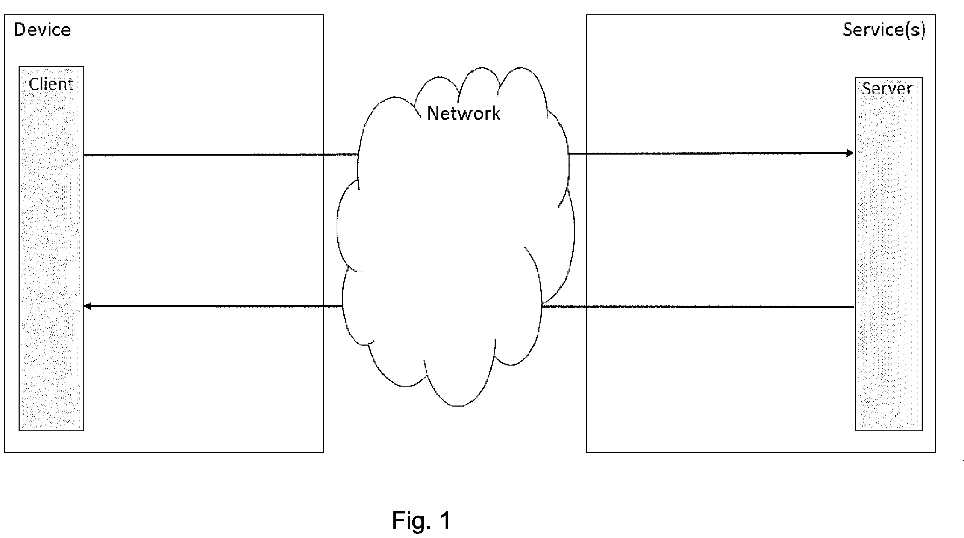

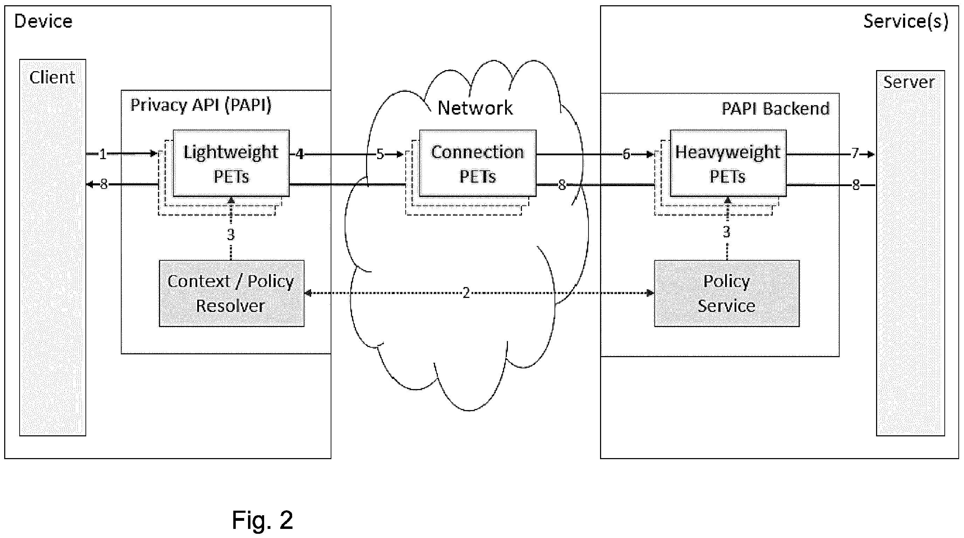

Fig. 1 shows a generic service provisioning chain with bidirectional data flow (black solid arrows) from device client (left) over a network (center) to a service server (right) in the traditional scenario without privacy enhancement. Fig. 2 shows the privacy enhanced scenario with the two PAPI modules, together functioning as a distributed interceptor, in between. Data transfers (1) with payloads from client to server may be intercepted and transformed (from lightweight PETs to connection PETs to heavyweight PETs) without breaking the actual service. First, the client-side PAPI may apply a set of client-side PETs (4). Second, PAPI tunnels the data e.g. through a set of connection PETs in the network (5) to the PAPI Backend on service side where a set of server-side PETs (6) may be applied. Finally, the privatized data may be sent to the service end-point (7) and response returned (8) through PAPI to the client.

The middlewares set of enabled PETs and their configuration is determined on the fly (3) according a contextual configuration policy (dotted control flow arrows and boxes). PAPI resolves per request in real-time the device/user's privacy context (2), e.g. location, time, client id, user id, etc., and determines a context matching policy locally (cached) or remotely with the policy service in PAPI Backend. The user's and regulatory privacy requirements associated with a policy may be negotiated out-of-band or in an authorized user interface in PAPI Backend.

It is appreciated that the illustrated embodiment is merely exemplary. For example, the middleware components (privacy API and backend PAPI modules) may be deployed in arbitrary service layers, e.g. in/outside the service client, in/outside the device, in/outside the service network or in/outside the service server.

According to certain embodiments, the control flows are also tunneled through the middleware. The backward/response flows may be treated with the same privacy enhancing chain as the forward flow, but in reverse order. Both control flow and response flow may have different PET chains than the forward flow and their respective PET chains may be different from each other.

PAPI, PAPI Backend and their PETs may each function as independent services. Hence, the system is not limited to traditional client-server scenarios. In Peer-to-Peer (P2P) scenarios, the middleware (e.g. PAPI) typically privatizes communication from PAPI to PAPI instances. In service cooperation scenarios, the middleware typically privatizes communication from PAPI Backend to PAPI Backend instances and single PETs may be used as a service.

Operation of PETs at the server side may be generally the same as for client-side PETs. The operation of PETs at the client side may vary, depending on the PET. Typically, from the point of view of PAPI, PETs are black boxes with specified interfaces and functionality. Once selected, the data feeds into the PETs yielding results, and the respective results are returned to the system and /or to the next PET in the chain. PETs may be implemented as plug-ins, e.g. using a state of the art plugin-system such as provided by OSGI, JPF or Kharrat and Quadri.

Typically, from the point of view of PAPI, the structure and operation of PET connections on data are black boxes. Client-side PETs typically run on the client, connection PETs typically run outside the client, e.g. as a cloud service. Typically, connection PETs are called after client side PETs and before server side PETs.

The PAPI, when operating on data, typically intercepts data from other applications on the device, and applies privacy measures via PETs, thereby to yield a "private" output, and forwards the private output to the originally intended recipients.

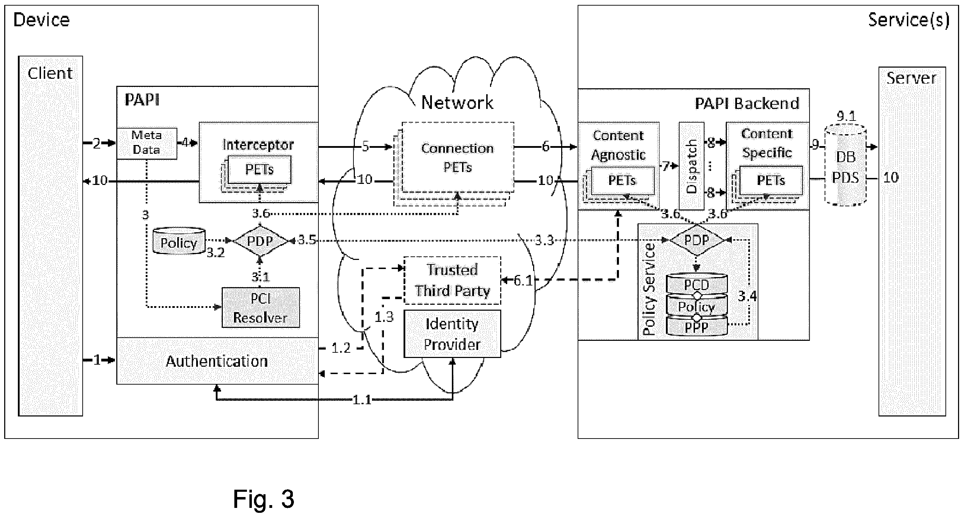

Typically, all building blocks work together e.g. as depicted in Fig. 3. The solid arrows show the direction of the data flow, not necessarily the caller-callee direction, whereas the dotted arrows show the policy and configuration control flow. Some or all of the Meta Data Adapter, Dispatch and Authentication and Identity Provider modules may be provided as libraries, services, plug-ins or in any other from by third-parties as part of their standard product portfolio or may be specifically built, using conventional meta-data techniques, by either third-parties or the instance that implements the PAPI system. The Meta Data Adapter may for example be operative for augmentation of data with suitable metadata, including receiving the data, identifying suitable metadata, e.g. by identifying keywords in the data which appear on a list of keywords given at setup time, and adding metadata to data e.g. using rules such as "if keyword x appears, add metadata y". The Dispatch module may include targeted forwarding based on payload type, e.g. by receiving data, determine type of payload (e.g. text, audio, video, ...), e.g. by inspection or by looking at the respective meta data, and forwarding to a target associated with the type (association given at setup time)

An Identity & Authentication Service may be provided, e.g. such as those provided by Google, Facebook or Twitter. Any suitable Identity & Authentication Software may be employed such as, say, Ping Identity: On-Prem and Cloud Based IDP (and SP) for Enterprise, OIDC/SAML/OAuth, software which provides email-based OIDC passwordless authentication such as Cierge, Keycloak being an example of Java-based OIDC/SAML IdP, Auth0 being another example of OIDC IdP and Gluu being another example of OIDC/SAML IdP. Any suitable programing language may be employed such as but not limited to C, C++, C#, Java, Scala or Kotlin. Suitable design patterns are known - e.g. as described in Gamma, Erich et al, (1995). Design Patterns: Elements of Reusable Object-Oriented Software. Addison-Wesley. ISBN 0-201-63361-2, or in Buschmann, Frank et al (1996). Pattern-Oriented Software Architecture, Volume 1: A System of Patterns. John Wiley & Sons. ISBN 0-471-95869-7. Any suitable Identity and Authentication and Protocols may be employed such as, say, those of Kerberos, OpenID, SAML or Shibboleth.

Client, Server, Authentication, and Identity Provider components may use any standard state-of-the-art technologies. Any suitable technology may be used for interconnecting these functional components in a suitable sequence or order e.g. via a suitable API/Interface. For example, state of the art tools, such as but not limited to Apache Thrift and Avro which provide remote call support, may be employed. Or, a standard communication protocol may be employed, such as but not limited to HTTP or MQTT, and may be combined with a standard data format, such as but not limited to JSON or XML. Interfaces 1.2, 1.3 and 6.1 deal with establishing / resolving pseudonyms. Interfaces 3, 3.1, 3.2, 3.3, 3.4, 3.5, and 3.6 deal with establishing / resolving policies and any suitable implementations for using policies may be employed. Interfaces 9 and 9.1 deal with data store access which may be standardized (e.g. SQL) or may be defined by a suitable data base technology. Interfaces 4, 5, 6, 7, and 8 deal with the traffic that is routed through a PET chain. Typically, the PET chain is embedded into a standard client-server setting and uses conventional protocols and data structures.

Black dashed flows (arrows) and modules (blocks) like Trusted Third Party (TTP), Connection PETs and a Personal Data Store (PDS) may or may not be provided depending e.g. on the set of PETs and/or their respective infrastructure requirements.

a) Initially, the device client, user or a combination of both authenticates (1) against the PAPI service (simplified), e.g. with an Identity Provider issued identity (1.1) and optionally against a TTP (1.2) as well, to exchange the identity against TTP issued pseudonyms (1.3).

b) PAPI receives a data transmission (2) with payload and metadata (e.g. destination, protocol, etc.), enriches the metadata with privacy annotations for PETs and starts the policy resolution (3).

c) PAPI resolves a Privacy Context Instance (PCI) for the transmission (3.1), e.g. current timestamp, geolocation, user id, app id, etc. and matches the PCI on the locally cached set of policies (3.2) in the Policy Decision Point (PDP). Every policy has associated evaluable Privacy Context Descriptions (PCDs) e.g. location space, time space, user id set, app id set, etc. and PET configuration profiles (PPP). If a context matching policy is found, the PAPI PETs including the Connection PETs, as well as the PAPI Backend's PETs are enabled and configured according to this policy's PPPs (3.6). Otherwise, PAPI resolves a new policy remotely (3.3, 3.4, 3.5) from the Policy Service in the PAPI Backend.

d) According to the resolved policy's PPPs, PAPI starts the execution of client-side data transforming PETs (4), e.g. pseudonymization, data whitelisting, perturbation, etc. on the request payload, configures connection PETs (5), e.g. Tor, VPN, etc. and sends the payload with additional parameters (policy id, PCI, destination, etc.) to the PAPI Backend.

e) The PAPI Backend in front of the service receives the request and configures the server-side PETs either according to the PAPI resolved policy (identified by a policy id in the request) or re-evaluates the request's PCI to a policy. First, Content Agnostic PETs are executed (6), e.g. pseudonym verification with the TTP (6.1), data aggregation, data trust metrics, encryption, etc. Second, a dispatch module (7) prepares the payload (8) for Content Specific PETs, e.g. video/voice masking, k-anonymity, etc.

f) Finally, the PAPI Backend removes PET related privacy annotations, sends the privatized payload to the original destination endpoint (9) and forwards the service's response back to PAPI and the client (10).

g) Optionally: The Backend stores the payload in a Personal/Private Data Store (PDS) (9.1) with e.g. policy-based encryption, differential privacy constraints and auditable access control for (3rd party) service's usage.

Device layer middleware (PAPI) may for example be implemented as Android library with 3 PETs. Service layer middleware (PAPI Backend) may for example be implemented as a Web Service with 2 PETs.

Certain embodiments include mapping of contextual privacy requirements (e.g., weak/medium/strong confidentiality, usage and participation un-linkability, indistinguishability, trust, deniability and awareness) to PET configurations with fine-granular privacy goals. Due to the expressiveness of (composite) context modalities, policies may be bound to very fine-grained constraints e.g. may be made sensitive to all kinds of conditions. For example: Data is to be anonymized, if and only if user does not work daytime, and the device is off company premises, and/or data is to be left untouched if user is in a meeting, and/or data is to be dropped if user is in the bathroom and/or location blurring to be applied on Mondays or any operation applied to the data, given any other logical condition.

Furthermore, PETs on all deployed devices may be centrally extended over the PAPI Backend's PET registry. Users and authorities may negotiate their privacy preferences for policies associated to their specific context instances, e.g. user id, in the PAPI Backend.

A Content Agnostic PET typically comprises a PET which operates without knowledge of the actual content or format of the payload, e.g. does not need to look into the actual data and instead may operate on protocol level, may only work on meta data or may only work on the ASCII/binary representation of the payload without needing to understand it.

The PAPI is typically deployed between a regular client and a regular server. The server response arrives e.g. from whatever server the client chooses to connect to. For example, a web browser (client) may request a certain web page from a web server (server). The server's response may then be this web page (or access denied, or pop up for authentication or any other suitable response from the server to that request).

Embodiments of the invention are applicable in any service infrastructure and may enable privacy sensitive service domains.

For example, one embodiment is the application in an Event Participation Tracking service where end-users, aka "customers", wish to track and measure quantity or quality of their live events, e.g. favorite concerts or activities based on corresponding emotions and feelings. This embodiment's service infrastructure is shown with PAPI as privacy enhancing middleware. Customers are equipped with wearables and mobile phones to collect, process and share personal data, e.g. heart rate, temperature, video, audio, location, social network events, etc. The service application transfers the data through PAPI to the service cloud to track and quantify events with analytics and artificial intelligence services.

Thus, customers' privacy needs in sensitive contexts, e.g. off topic encounters, bathroom breaks, etc. are considered automatically throughout the service provisioning chain owing to a negotiated privacy policy for these (composite) contexts in the PAPI Backend.

For example, the customer's identity is replaced with pseudonyms, sensitive data is removed or perturbated (e.g. geolocation), the source network/IP of the device is anonymized (Tor), personal (inferred) data is encrypted and stored in the PDS to be shared only with customer consent, etc.

It is appreciated that, generally, privacy may require removal of whichever portions of data are not needed, blurring of whichever portions of the data do not need full accuracy, such that the blurred version is sufficient, and leaving untouched (only) whatever data is truly needed.

Examples of how the above cases may be used include but are not limited to the following scenarios:

1: Removing all PII except age allows for fully anonymized profiling of behavior of age groups.

2: Pseudonymization of all IDs allows for privacy aware analytics with the possibility to reveal real ID with user consent.

3: Pseudonymization of all IDs allows for privacy aware detection of unlawful behavior with de-anonymization by court order.

4: Detecting usage patterns of public infrastructure, e.g. public parks, by video analytics while blurring faces for anonymization.

The following prior art technologies, providing Contextual Policies, may be used as a possible implementation for the above described operations:

[1] G. Parupudi, S. S. Evans and E. F. Reus, "Methods and systems for context-aware policy determination and enforcement". US Patent US7072956 B2, 4 July 2006. selects policies based on detected contexts. The actual policy enforcement may be given to a third party e.g. as per the disclosure herein.

[2] J. O. Blom, "Method and apparatus for providing contextual data privacy". US Patent US20130340086 A1, 19 December 2013. Describes the determination of privacy policies for aggregated data requests of local applications. A user device middleware aggregates data associated with context modalities and determines one or more policies based on the modalities, determined data richness categories, vulnerability levels and composite scores.

The following prior art technologies providing Privacy Middleware, architectures and frameworks, may be used as a possible implementation for the above described operations.

[3] W. K. Lee and J. M. Stone, "Transparent interceptors for privacy policy implementation". US Patent US 7748026 B1, 29 June 2010 describes a transparent middleware/interceptor for controlling access to information stored in a local data store with at least one privacy policy.

[4] S. Boldyrev, J.-J. H. Kaaja, H. E. Laine, J. Honkola, V.-V. Luukkala and I. J. Oliver, "Method and apparatus for providing end-to-end privacy for distributed computations". US Patent US 8661500 B2, 25 February 2014describes a method to provide end-to-end privacy for distributed computations based on privacy policies and computation closures associated with the computation environment. Policies are not bound to context modalities and privacy enforcement happens inside of every participating device. It may be deployed in specialized service infrastructures.

[5] B. Raghunathan, V. K. Saxena, V. Subbarao and S. Natarajan, "Methods and systems for runtime data anonymization". US Patent US20120259877A1, 11 October 2012 describes an anonymization engine to intercept communication, identify sensitive data, mask this data and transmit the anonymized data.

[6] M. Henze, L. Hermerschmidt, D. Kerpen, R. Häußling, B. Rumpe and K. Wehrle, "A Comprehensive Approach to Privacy in the Cloud-based Internet of Things," Future Generation Computer Systems, vol. 56, pp. 701-718, March 2016 presents a system to control and enforce lawful privacy requirements in cloud-based Internet of Things infrastructures.

[7] M. Barhamgi, D. Benslimane, S. Oulmakhzoune, N. Cuppens-Boulahia, M. Mrissa and H. Taktak, "Secure and Privacy-preserving Execution Mode or Data Services," in International Conference on Advanced Information Systems Engineering, 2013 describes a privacy-preserving service execution model that controls information disclosure based on invocation identity and purpose.

[8] I. D. Addo, S. I. Ahamed, S. S. Yau and A. Buduru, "Reference Architecture for Privacy Preservation in Cloud-Based IoT Applications," IJSC, vol. 2, no. 4, October 2014.

Example user input and output interfaces of a user of a PAPI instance that contains a PET combiner instance are now described. The interaction of the user may be characterized by any or all of the following:

- all interfaces provided by whatever client is chosen may remain untouched, e.g. in the web-surfing example, the user deals with his browser in the usual way.
- there may be an interface provided by PAPI (or the PET combiner) to the user. Using this interface, once or on occasion, the user may select the policies that he deems adequate for his purposes i.e. that fit his (subjective) privacy needs.

- the combined PET system and respective privacy metric may be presented to the user indicating the plied privacy measures.
- the applied PETs may or may not present more interfaces to the user. An example would be showing warnings to raise the user's awareness when sending sensitive data out.

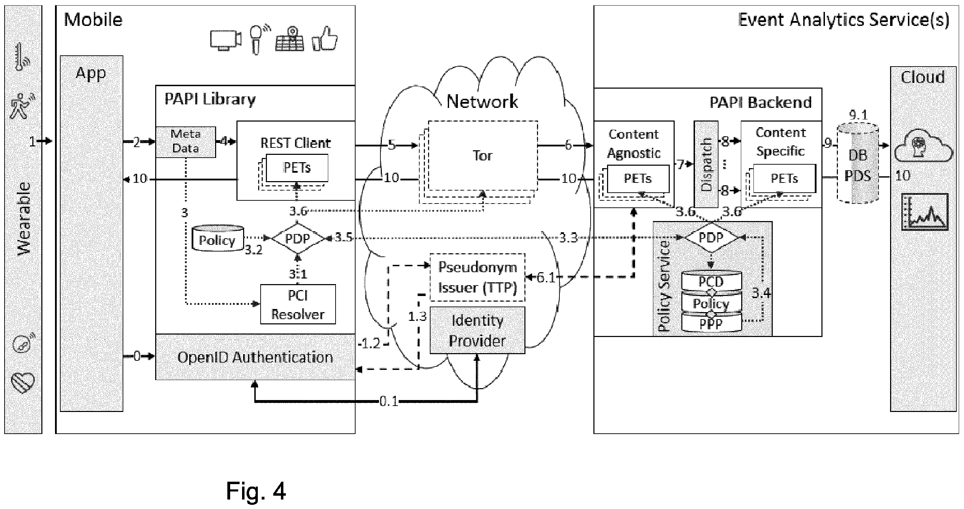

It is appreciated that the Privacy Architecture of Figs. 1 -4 provides a suitable data flow from A over B to C, where:

A may be any end-user application/client,

B is data privatizing PET-middleware and

C may be any end-service that interacts with application A (e.g. to store and process the end-users data).

Typically, a user sends data from application A to service C. This data is intercepted by middleware B, typically but not necessarily, the interception is transparent to A. Middleware B derives a configuration-policy (combination of PETs) from the user's chosen/assigned privacy policy (the policy is, once or occasionally, selected by the user from a given set of policies, e.g. prior to registering for service C). After applying the ad hoc instantiated PET combination on the data, the middleware forwards the privatized data to end-service C. Typically, the PET Descriptions come from the privacy middleware that in turn derived the PETs to use from the negotiated policy. Typically, configuration descriptions are delivered either at setup time or later during maintenance by the system administrator. Typically, the PET system description is delivered back to the privacy middleware, representing the PET system currently employed. Typically, the privacy metric indicating the level of privacy that has be achieved is (also) given back to the privacy middleware. Typically, both outputs may be given to the end user or the service thereby to inform the user or service of applied privacy measures.

Backward data flow from C to A may work analogously; response data from C typically goes through B where the data is privatized according to the established PETs that have been derived from the policy established during negotiation. From there, the data may be delivered to application A, where it is handled by A according to A's typical behavior.

Figs. 1 -4 describe an example architecture where the PET composer system of Figs. 5 - 6 at hand may be embedded. There is also, however, a possibility of using an alternative architecture or using the combiner manually, e.g having a user feeding the combiner input PET descriptions, receiving the output descriptions, maybe repeatedly with different combinations of PETs until he is satisfied with the result. Then, based on the output, manually deploying the respective PETs in all needed locations, ensuring the user's client application (e.g. web browser) and server application (e.g. web server) still work and may even be agnostic to the existence of the privacy measures. The process may be repeated on context change to establish a context sensitive privacy enforcement.

A PET composer method and system for composing and metering PET systems is now described. As shown in Fig. 5, the system typically includes a Taxonomy Module converting inputs to an internal taxonomy, a Composition Splitter dispatching between the different types of compositions, a Property Module for composing properties, a Capability Module for composing capabilities, a Composition Merger for assembling the different compositions, and a Metrics Module for computing the resulting privacy index.

Computers & Security Volume 53, September 2015, Pages 1-17, "A taxonomy for privacy enhancing technologies" by Johannes Heurix et al, describes that Privacy-enhancing technologies (PETs) are technical measures preserving privacy of individuals or groups of individuals. PETs are difficult to compare. Heurix provided a tool for systematic comparison of PETs.

Fig. 5 shows modules of a PET composer system, some or all of which may be provided e.g. for use in conjunction with the architecture of Figs. 1 -4.

The components, data, and flow may be as follows:

The input to the system of Fig. 5 may comprise descriptions of the PETs to be composed. The descriptions may be files in the internal formal taxonomy, may be submitted by a GUI utilized by a user, or any other suitable means of data input. The input may include references to PET descriptions already stored in the Data Store. The PET Descriptions may be sent to the system of Fig. 5 via the Taxonomy Module using any suitable syntax or API such as but not limited to those described herein.

The input (e.g. descriptions or data describing at least one PET) is provided to the Taxonomy Module of Fig. 5 in a predetermined internal data format e.g. as described herein or any suitable formalization of, e.g., the taxonomy of Figs. 7a - 7b. If this is not the case, the Taxonomy Module may convert the input into, e.g. the internal formal taxonomy of Figs. 7a - 7b. The Taxonomy Module stores the descriptions in the Data Store and forwards them to the Composition Splitter.

It is appreciated that the taxonomy typically includes binary attributes aka properties which each PET either has or does not have, as well as multi-level attributes, aka capabilities, whose levels indicate the "strength" of that attribute possessed by a given PET e.g. strong confidentiality vs. weak confidentiality. Typically, the "strength" of an attribute is a scalar indicating an ordinal level (aka value) of a certain attribute possessed by a given PET.

The respective data structures (e.g. set structures) may be those described below in the description of "Model Definition" herein.

The state of the art teaches how to translate the formal definitions herein, for dimensions p, g, d, r, a, f etc., and their respective properties and capabilities, into computer legible data structures, using a suitable data format which may include attribute-value pairs, suitably nested. Since sets are prevalent in so many programming languages, any suitable constructs in any suitable programming language may be used to store these structures. Typically, although not necessarily, JSON, XML, ASN.1 are not optimal for representation of the data structures in computer memory (as opposed to APIs). An example JSON structure or syntax, useful on the API level, for representing an individual PET using the taxonomy of Figs. 7a - 7b is provided below; additional information such as identifiers and/or time-stamps may be added for easier handling of the data within the system.

Example syntax, using JSON:

```
{
 "ID": PET UNIQUE IDENTIFIER,
 "DB": PET DB REFERENCE,
 "TS": PET CREATION TIME STAMP,
 "Name": PET DESCRIPTION NAME,
 "PTM": {
   "P": CHOICE & CONSENT | CONTEXT | CONTROL | DATA MINIMIZATION |
   NOTICE,
      "G": {
      "AWARENESS": STRENGTH,
      "CONFIDENTIALITY": STRENGTH,
      "DENIABILITY": STRENGTH,
      "INDISTINGUISHABILITY": STRENGTH,
      "TRUST": STRENGTH,
      "UNLINKABILITY": {
         "PARTICIPATION_HIDING": STRENGTH,
         "USAGE_HIDING": STRENGTH
      }},
      "D": STORED | TRANSMITTED | PROCESSED,
      "R": {
         "TYPE": CO-OPERATIONAL | DENIABLE,
         "DEGREE": FULL I PARTIAL
      },
      "A": {
         "BEHAVIOR": VALUE,
         "CONTENT": VALUE,
         "IDENTITY": {
            "ANONYMITY": {
                  "DIRECT": SINGLE | MULTI
              },
            "PSEUDONYMITY": {
                  "DIRECT": SINGLE | MULTI,
                  "HOLD": INDIVIDUAL | GROUP,
                  "CARD": LIMITED | UNLIMITED
               }
          }
      },
      "F": {
          "SECURITY METHOD": COMPUTATIONAL | INFORMATION
           THEORETICAL,
         "ATTACK METHOD": CUSTOM | DOLEV-YAO | PFITZMANN,
         "THREAT MODEL": CUSTOM | SOLOVE | ZIEGELDORF,
          "CRYPTO": ASYMMETRIC | SYMMETRIC | UN-KEYED | NON-
```

```
   CRYPTOGRAPHIC,
   "PROTECTION DOMAIN": DEVICE | CONNECTION | CLOUD,
   "CATEGORY": {
       "COMMUNICATION": VALUE,
       "DATA": AUDIO | FOOTPRINT | LOCATION | STREAM | VIDEO |
       WEB
   }
},
"T": {
   "FREQUENCY": SITUATIONAL | PERMANENT,
   "PHASE": SETUP | REGULAR,
   "TASK": VALIDATION | OPERATION
},
"S": UNTRUSTED CLIENT | UNTRUSTED SERVER | EXTERNAL
  }
}
```

An example PET description which uses the above syntax to describe a PET that provides TTP-based pseudonymization for authentication and authorization is as follows:

```
{
"ID": "ABC123",
"DB": false,
"CTS": "2018-02-08T17:27:26+00:00",
"Name": "PTTP",
"PTM": {
  "P": "CONTROL"
      "G": {
          "UNLINKABILITY": {
              "PARTICIPATION_HIDING": 2,
              "USAGE_HIDING": 2
      }
      },
      "D": "PROCESSED",
      "R": {
          "DEGREE": "FULL"
      },
      "A": {
          "IDENTITY": {
              "PSEUDONYMITY": {
      "DIRECT": SINGLE,
              "HOLD": "INDIVIDUAL",
              "CARD": "LIMITED"
          }
        }
      },
      "F": {
          "SECURITY METHOD": "COMPUTATIONAL",
          "ATTACK METHOD": "PFITZMANN",
          "THREAT MODEL": "CUSTOM",
          "CRYPTO": "ASYMMETRIC",
          "PROTECTION DOMAIN": [
              "DEVICE",
              "CONNECTION",
              "CLOUD"
          ]
      },
      "T": {
      "FREQUENCY": "SITUATIONAL",
      "PHASE": "REGULAR",
      "TASK": "OPERATION"
    },
      "S": "UNTRUSTED SERVER"
```

```
        }
    }
```

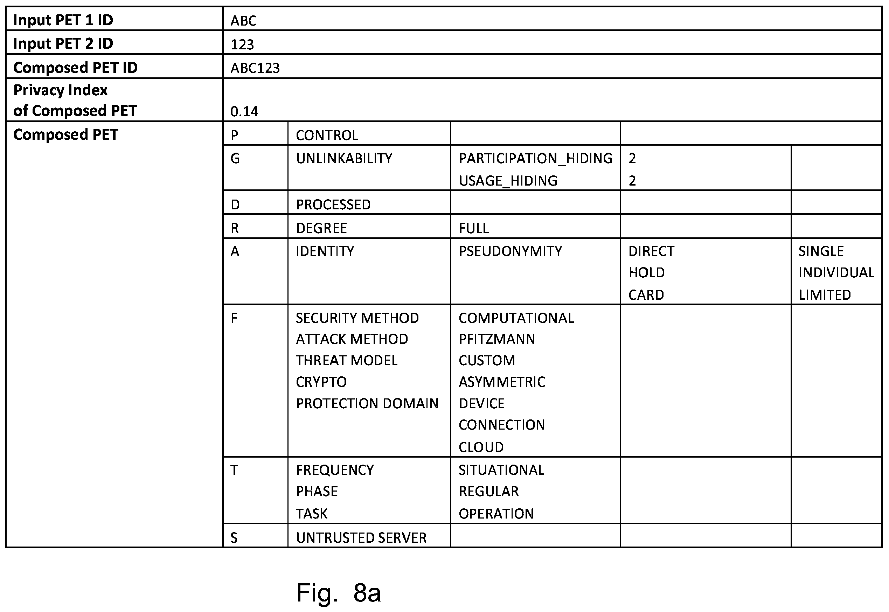

The above example is used herein in the description, for clarity. To see example values for the above, see the table of Fig. 8a.

Features and tweaks which accompany the JSON format may be allowed, e.g. use of arrays using square brackets. Also, the syntax may be extended (or shrunk) by adding (or removing) fields. The same is true for the possible values that may be assigned to the fields. Currently, the existing sub-fields for the PTM field and their possible values are those defined herein with reference to Figs. 7a - 7b, and in the description of "Model Definition" herein. The others are as follows:

☐ ID: unique alpha-numeric identifier for a PET description input in fig. 5.

☐ DB: Boolean, indicates if the actual PET description is already present in the system's Data Store (e.g., perhaps the PET description entered the DB when a previous combination of PETs was being processed). If DB = true, all subsequent fields may be ignored or skipped.

☐ CTS: day and time of creation of the PET description [e.g. ISO 8601].

☐ Name: alpha-numeric display name of PET description.

Conventional technology may be used to create an API to ingest the data structures shown above, such as but not limited to REST, SOAP.
It is appreciated, that converting ingested data into a given target format such as but not limited to JSON or XML, may be performed as is conventional.

A Composition Splitter may be provided in Fig. 5. The splitter inspects the incoming flow of PET descriptions and routes them depending on whether properties or capabilities of the PET are described (where distinguishing between properties and capabilities is explained herein e.g. with reference to Figs. 7a - 7b and in the description of "Model Definition" herein), sending properties or capabilities to the Property Module or Capability Module of Fig. 5 respectively. In one embodiment, the Composition Splitter and Composition Merger are omitted, and the Property Module and Capability Module are merged into a property/capability module that directly acts upon properties and capabilities.

It is appreciated, that inspecting data in a specified data format and splitting it according to given rule may be performed as is conventional, e.g. the rules may be:

☐ Properties are sent to the Property Module.

☐ Capabilities are sent to the Capability Module.

The Property Module of Fig. 5 merges PET properties e.g. using the Compositional PET Algebra described herein. A conventional set union may for example be employed, e.g. in software.

The Capability Module of Fig. 5 merges PET capabilities e.g. using the Compositional PET Algebra described herein. Constrained set unions e.g. the weakest link constrained composition w described herein (in which a set-union is computed per property dimension but not, as described below, per-capability dimension) may for example be employed, e.g. in software.

The Composition Merger of Fig. 5 assembles the composed PET properties and capabilities into one description representing the composed PET system; this description is then stored in the Data Store and/or forwarded to the Metrics Module of Fig. 5 and/or provided as a system output. This may be performed by conventional merging of the two disjoined data sets, both having the same specified data format (e.g. the taxonomy defined above), into a single data set of the same data format e.g. in software. Note that, due to the algebraic properties, the composed PET system may be described by the data structures defined for the Taxonomy Module of Figs. 7a - 7b. In an example embodiment, the same JSON structure may be used as defined above when describing the Taxonomy Module.

The Metrics Module of Fig. 5 computes the resulting privacy index aka privacy metric, as described below. The Privacy Metric is stored into the Data Store and/or provided as a system output. The state of the art teaches how to translate the given mathematical formula into computer executable code and data structures. The actual result is a single number that may be encoded in any given way known in the art, such as using plain ASCII, JSON, XML, ASN.1 or others.

A respective JSON structure for a privacy index for a single PET is shown as an example of a possible implementation. Additional information, such as identifiers, time-stamps and others, may be added for easier handling of the data within the system.

Syntax

```
{
"ID": INDEX UNIQUE IDENTIFIER,
"TS": INDEX CREATION TIME STAMP,
"Name": INDEX DESCRIPTION NAME,
"Index": INDEX VALUE: [0,1)
}
```

Example

```
{
"ID": "ZYX987",
"CTS": "2018-02-08T17:27:26+00:00",
"Name": "PTTP Privacy Index",
"Index": "0.5"
}
```

where the fields ID, CTS, and Name are defined generally as described elsewhere herein in the context of the Taxonomy Module of Fig. 5.

The Configuration Descriptions of Fig. 5 specify the system configuration and typically arrive via an optional configuration module. Example configuration parameters include but are not limited to:

☐ Whether or not to store various data in the data store of Fig. 5

☐ Retention time of various data in data store of Fig. 5

☐ Selecting constraint union in case there is more than the example (weakest link union) provided herein.

☐ Which privacy metrics to compute (e.g., say, goal strength vs. counting the number of Attacker Models that are provided by the combined PET or other indicator of level of resilience against attacks, vs. both of the above).

☐ In case there are more than two input PETs, a parameter indicating which combinations to build e.g. if there are 3 inputs, perhaps build a combination of the first 2, then of the 3rd with the combination of the first 2

☐ Which kind of graphical output to produce, e.g. b & w tables or color-colored

The Configuration Module of Fig. 5 handles the configuration of the system. Typically, the configuration is read in, parsed and made available to the rest of the system.

Any available technologies for configuration management by the configuration module, may be employed e.g. Java.util.properties, Apache Commons Configuration, Preferences API.
The configuration format may for example be as follows:

```
{
"ID": CONFIG UNIQUE IDENTIFIER,
"DB": CONFIG DB REFERENCE,
"TS": CONFIG CREATION TIME STAMP,
"Name": CONFIG DESCRIPTION NAME,
"CONFIG": {
  KEY 1: VALUE 1,
  KEY N: VALUE N,
}
```

With the meaning of ID, DB, TS, and Name as with the other JSONs. The actual configuration, which may be an arbitrary and flexible number of key value pairs, both alphanumeric, may be, say:

```
{
"ID": "QWERTZ",
"DB": false,
"TS": "2018-02-08T17:27:26+00:00",
```

```
"Name": "My super config",
"CONFIG": {
  "USE_DB": "yes",
  "DB_RETENTION": "1 week",
  "GRAPHICAL_OUT": "table"
}
```

The Data Store of Fig. 5 , if provided, typically holds persistent data of the system, including some or all of the PET descriptions, configuration and intermediate data produced by the components. All modules may have access to the Data Store. Communication with the data store may be standardized (e.g. SQL) or may be defined by a suitable data base technology. Generally, any suitable implementation for inter-component communication may be employed between the modules of Fig. 5. For example, state of the art tools may be employed, such as but not limited to Apache Thrift and Avro which provide remote call support. Or, a standard communication protocol may be employed, such as but not limited to HTTP or MQTT, and may be combined with a standard data format, such as but not limited to JSON or XML.

Regarding the internal taxonomy and the privacy index, any state-of-the-art data store for discrete data is suitable such as but not limited to Files, Databases, Cloud Stores.

For example, if JSON is used, Elasticsearch (a distributed, multitenant-capable full-text search engine with an HTTP web interface and schema-free JSON documents which supports storage of JSON documents out of the box) may be used to store and index data and provide a search interface therefore. IF XML is used, a DB that has native XML support may be used, such as BaseX or eXist.

Regarding the configuration, depending on the choice of the state-of-the-art configuration management, suitable data stores may be used. As an example, if JSON is a supported format, Elasticsearch may be used. IF XML is used, a DB that has native XML support may be used, such as BaseX or eXist.

A PET System Description is an optional output of the system of Fig. 5 which typically includes a formal description of the composed PET. The data format may be that provided by the Composition Merger of Fig. 5.

Conventional technology may be used to create a respective API to export the data structures, such as but not limited to REST, SOAP. Typically, the API outputs the composed PET in a specified data format e.g. the JSON used for PET input as described herein.

Privacy Index is an optional output of the system which typically includes a respective privacy index for each PET. The data format is typically the format provided by the Metric Module. Conventional technology may be used to create a respective API to export the data structures, such as but not limited to REST, SOAP. Typically, the API outputs the privacy index in a specified data format (e.g. the JSON used for privacy index as described herein).

Example use of the system of Fig. 5: It is appreciated that the system of Fig. 5 may for example be useful for pace tracking / jogging / running use-cases, in which smart watches or smartphones are employed and a service is provided to end-users, such as for example a jogging route recommendation service. This service may compromise privacy. For example, data about an end-user's location is sensitive and undesired leaks should be prevented. Table 2 from the ARES paper "Constraint PET Composition [...]", described herein, may be employed. The following PETs PI, P2, P5 may be employed:

P1: inverse whitelisting (=blacklisting) would prevent sharing sensitive location data.

P2: pseudonyms would prevent that tracks/routes of single individuals could be linked over time.

P5: differential privacy would prevent sharing of exposed routes (a route only used by a single person would expose this person),

which, in sum, yields a privacy index of:

$$\text{Privacy}(P1 \text{ "+" } P2 \text{ "+" } P5) = (0.5 + 0.5 + 0.25 + 0.75) / 3 = 0.667,$$

where "+" is the weakest link composition shown and described herein.

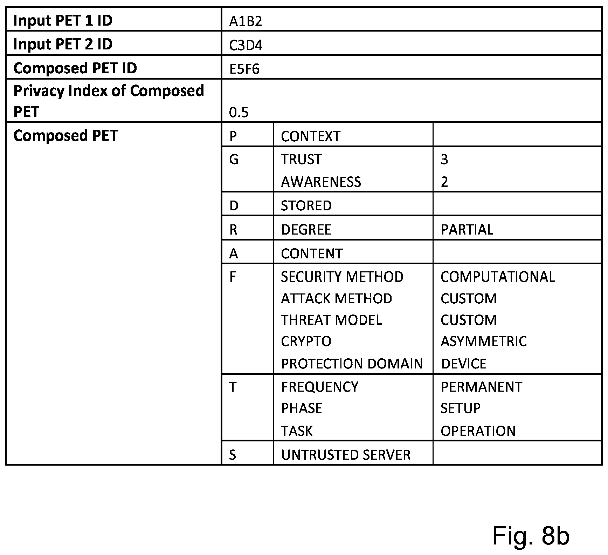

Figs. 8a -8b are two respective examples of results generated by the system of Figs. 7a and 7b, taken together. Fig 8a shows a result (PET ABC123) of combining first and second input PETs, ABC and 123. The composed PETs privacy index is 0.14. This is a control PET that provides unlinkability by participation hiding and usage hiding, both with level 2. It works on processed data, is fully reversible, provides pseudonymity, is based on computational security and Pfitzmann attack model, has a customized threat model, uses asymmetric cryptography, covers all protection domains, makes use of a Trusted Third Party and tackles the "untrusted server" scenario. Fig 8b shows a result - PET E5F6 - of combining A1B2 and C3D4. PET E5F6's privacy index is 0.5. PET E5F6 is a context PET aiming at providing trust level 2 and awareness level 3 (to the user) which works on stored data and is partially reversible. PET E5F6 is based on computational security having a custom attacker model and a custom threat model which uses asymmetric cryptography and covers the protection domain "device" only. PET E5F6 makes use of a Trusted Third Party and tackles the "untrusted server" scenario.

Any suitable method, even manual, may be employed, given a PET, to assign values to each attribute thereof. For example, values may be assigned by an individual provider or developer of a PET, or by a community of privacy experts/PET developers, based on human expertise in the field of PETs, thereby to provide a formal description of the PET, using all or any portion or variation of the taxonomy of Figs. 7a - 7b, taken together.

Example: example PETs mapped to the taxonomy of Figs. 7a - 7b, including value assignments, are as follows:

Name of example PET: DC-Net

Short description: DC-Nets are an information theoretical secure approach to hide the sender of a message within a group of senders.

```
{
"ID": "DEF456",
"DB": false,
"CTS": "2018-02-21T17:19:38+01:00",
"Name": "DC-Net",
"PTM": {
  "P": "Data Minimization"
  "G": {
  ["UNLINKABILITY": {
      "USAGE_HIDING": 1
  },
  "DENIABILITY": 2,
  "INDISTINGUISHABILITY": 2]
},
"D": "TRANSMITTED",
"R": "Co-Operational",
"A": {
  "IDENTITY": {
      "ANONYMITY": {
          "DIRECT": SINGLE
      }
  }
},
"F": {
  "SECURITY METHOD": "Information Theoretical",
  "CRYPTO": "SYMMETRIC",
  "PROTECTION DOMAIN": "CONNECTION"
},
"S": "UNTRUSTED CLIENT"
}
}
```

Name of example PET: k-Anonymity

Short description: k-Anonymity (and improvements 1-diversity, m-invariance) anonymize the records of a database (example: medical records) before releasing the database to a third party or an analytical process.

```
{
"ID": "GHI789",
"DB": false,
"CTS": "2018-02-21T17:29:11+01:00",
"Name": "k-Anonymity",
"PTM": {
```

```
     "P": "Data Minimization"
     "G": {
     ["UNLINKABILITY": {
         "PARTICIPANTS_HIDING": 2
     },
     "INDISTINGUISHABILITY": 1]
     },
     "D": "STORED",
     "R": {
       "DEGREE": 0
     }
     "A": {
       "IDENTITY": {
           "PSEUDONYMITY": {
               "DIRECT": "SINGLE",
               "HOLDER": "Individual"
           }
       }
     },
     "F": {
       "SECURITY METHOD": "Computational",
       "PROTECTION DOMAIN": "Cloud",
       "Category": {
         "Data": "Web
         }
     },
     "S": "External"
     }
     }
```

The system of Fig. 1 typically employs a Taxonomy Extension shown in Figs. 7a - 7b, relative to Heurix et al's state of the art technology, shown in prior art Fig. 6. Heurix et al. specify seven PET characteristic dimensions as shown in [A]: The embodiment of Aspect, Aim, Scenario, Foundation, Reversibility, TTP and Data. The embodiment of Figs. 7a - 7b renames the Aim dimension to Goal for distinct abbreviation; the characteristics are called PET privacy goals in the following.

The embodiment of Figs. 7a - 7b is typically configured to distinguish PET characteristics that are either possessive properties (unordered set) or achievable capabilities (ordered set). Hence, dimensions with possessive properties are called property-dimensions, such as Foundation and Scenario, because their characteristics contain no semantic order. Dimensions with achievable capabilities are called capability-dimensions; e.g., goal characteristics may be extended with ordered strength levels (e.g.: weak, medium and strong) to quantify achievable privacy goals. Based on these considerations, any subset of or all of the illustrated extensions and modifications, are made to the original taxonomy tree, as seen by comparing Figs. 7a - 7b to prior art Fig. 6; note that bold boxes indicate new characteristics and dashed boxes indicate removed characteristics, relative to the taxonomy of Fig. 6. Goal-dimensions are marked with $\mathbb{N}$ indicating, for certain embodiments, quantifiability over the natural numbers. It is appreciated that all or any subset of the blocks illustrated in Figs. 7a - 7b, may be provided such that the illustrated embodiment is not intended to be limiting.

Beside technical goals, such as Unlinkability and Indistinguishability, socio-economic goals are missing in the original scheme of Fig. 6. Awareness contributes to achieve transparency and legal compliance - thus awareness may be added in Figs. 7a -7b as an abstract privacy goal. Notifications, as well as choice and consent dialogs about collected data categories, usage purposes, and third-party recipients are measures to increase privacy awareness. Trust in services, their providers, and conversely in customers, is directly related to the notion of privacy.

Trust enhancing technologies and metrics to measure or increase trust in data and entities are typically provided. Therefore, the goal dimension is extended with trust and assume awareness, and trust enhancing technologies may be implemented as PETs in this model.

It is possible to distinguish between Unlinkability of Participants and Unlinkability of Usage. Hence, the embodiment of Figs. 7a - 7b is typically configured to adopt this differentiation as Unlinkability sub-characteristics. PETs may differ in achieving a particular privacy goal. e.g., encryption as PET may provide weak or strong confidentiality, depending on the security parameters (key length, etc.). To model fine-grained privacy goal capabilities, all goal characteristics are extended with quantifiable strength levels over $\mathbb{N}$.

A new property-dimension called Principle is introduced in the embodiment of Figs. 7a - 7b, to describe legal and socio-economic PET properties, including whether the PET provides enforcement of fair information practice principles such as notice and choice. For example, all or any subset of the following characteristics are included:

- Notice: PET provides privacy related notifications
- Choice & Consent: PET provides data agreement dialogs
- Data Minimization: PET minimizes collected data
- Control: PET to provide control over data content
- Context: PET is context-sensitive (time, location, ...)

The Principle dimension may be used to bridge between non-technical and technical PET stakeholders. Furthermore, the principle dimension enables extensions for mappings between legal and technical privacy policies that are based on composed PET properties.

The Foundation dimension is extended, in Figs. 7a - 7b, to include Category: Data (Location, Footprint, Audio, Video, Stream, Web) and Communication to capture data-specific application domains of PETs, as well as the Privacy Protection Domains: Cloud, Connection and Device. Attacker models are contained only implicitly in the Scenario dimension. For a more fine-grained definition of the attacker assumptions, some of the most common PETs underlying Attackers are added. The list of models is not complete, hence Custom is added to express undefined or unknown models.

TTP and Scenario: in the embodiment of Figs. 7a - 7b, TTP dimension characteristics None and Never are typically removed because modeling the absence of characteristics is unnecessary in sets as described below. Mutual distrust in the Scenario dimension is the combination of Untrusted Client and Untrusted Server, hence are typically removed from Figs. 7a - 7b as well.

The Reversibility dimension is especially notable in that it mixes capability and property characteristics. Cooperation contained in the original the characteristics Required and Not Required. Not Required may be removed. This leaves the sub-dimension with a single property. Hence, it moved up as a new Reversibility property called Co-operational. The Degree sub-dimension may be seen as capability set with the exception of the None and Deniable characteristic. None is obsolete and Deniable is a property of the reversibility, thus, it moves up. Currently, Degree is quantified by the two-element set {Full, Partial}. The usage of a finer grained quantifier set, either finite, such as {Full, Largely, Medium, Barely} or infinite, such as $\mathbb{N}$, $\mathbb{Q}$, or $\mathbb{R}$, may be done. In the case of a finite quantifier set, there are more elements, but an order may still be defined e.g. by determining a ranking extending from a "biggest" down to a "smallest" element and including all elements. In case of infinite quantifiers by numbers, the order is defined by the number system itself. In case of infinite non-number quantifiers, an order may be defined by bijective mapping to a number system and adopting the number system's order. An example for the latter is mapping all alphanumeric strings to $\mathbb{N}$ by interpreting the strings' binary representation (e.g. ASCII) as a binary number.

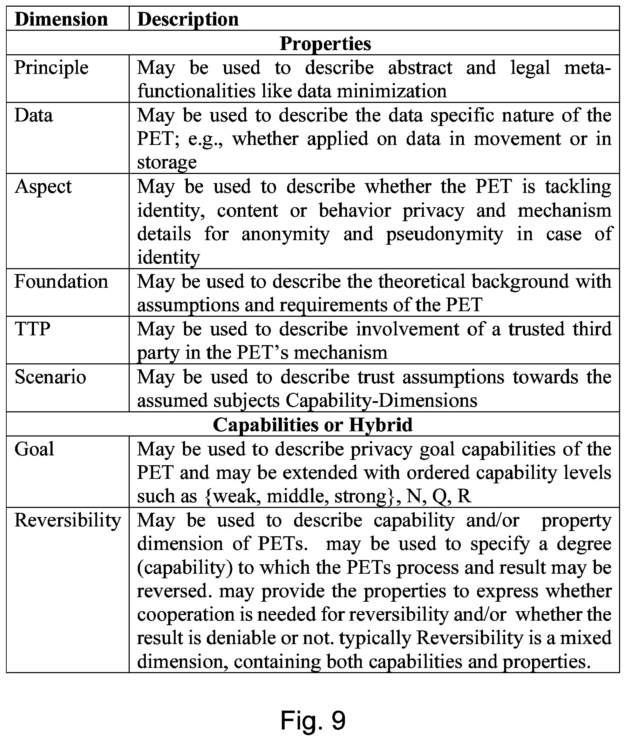

The table in Fig. 9 summarizes definitions of dimensions as property vs. capability vs. hybrid according to an embodiment of the invention and lists the extended PET taxonomy dimensions of Figs. 7a - 7b and intuitive descriptions of possible uses of the dimensions which may be useful for human experts. The original Heurix et al taxonomy's expressiveness is generally preserved in Figs. 7a - 7b other than, typically, omission of only semantically redundant and non-characteristics. These characteristics may be expressed with absence in a set or combination of other characteristics. The extended taxonomy of Figs. 7a - 7b is even more expressive, having additional characteristics and quantifiable capabilities. The taxonomy of Figs. 7a - 7b may be extended and tweaked, e.g., with more privacy goals, other properties or capabilities, or extended use of quantifiers analogously. Non-limiting examplesinclude: Exchanging the minimum goal strength union Umin by the maximum goal strength union Umax as defined herein, removing the "Aspect" dimension including deleting the Aspect node and all its subnodes from the tree, adding a Cost dimension by adding a respective node directly under the "PETs" root node and defining child nodes under the Cost node e.g. "Expensive", "Reasonable, "Cheap". Alternatively, instead of giving the Cost node child nodes, the Cost node may be directly quantified over the real numbers. In both cases, a suitable union over the new dimension is typically defined, or any other adaptation of the taxonomy and/or algebra shown and described herein.

An example Model Definition is now described in detail: The taxonomy dimensions are formalized as sets. Elements are dimensional leafs of the extended taxonomy tree. Deeper structures (tree depth bigger than two) will be defined as subsets for readability. A concrete PET is defined as a set of leafs from the taxonomy tree, respectively as a set of sets. To keep the information contained in the leaf path, element subscript labels may be introduced to specify their parent characteristic and identity. For example, weak usage- unlinkability will be expressed as $weak_{Unlink_{Use}}$. Model extensibility is guaranteed, since all properties and capabilities may be modeled with sets.

Definition

Principle (P), Goal (G), Data (D), Reversibility (R), Aspect (A), Foundation (F), TTP (T) $P$ = {Choice & Consent, Context, Control, Data Minimization, Notice}
and Scenario (S):

P is the Principle property set P.

$$G = \left\{ \begin{array}{l} STR_{\text{Aware}}, \\ STR_{\text{Conf}}, \\ STR_{\text{Deni}}, \\ STR_{\text{Indis}}, \\ STR_{\text{Trust}}, \\ \{STR_{\text{Part}}, STR_{\text{Use}}\}_{\text{Unlink}} \end{array} \right\}$$

$$GLABEL = \{\text{Aware}, \text{Conf}, \text{Deni}, \text{Indis}, \text{Trust}, \text{Unlink}_{\text{Part}}, \text{Unlink}_{\text{Use}}\}$$

$$STR = \mathbb{N}$$

G is the Goal capability set. The ordered strength level set STR is defined as countable infinite natural numbers $\mathbb{N}$. To model the path, goal labels GLABEL are introduced and defined here explicitly for reuse in later definitions, e.g., for the scale between weak (1), medium (2) and strong (3): $1_{\text{Aware}} \in G$ would state weak awareness. Labels allow strength level distinction of different privacy goals. For example, a PET with $\{1_{\text{Aware}}, 1_{\text{conf}}\} \subset G$, would provide weak awareness and confidentiality.

$$D = \{\text{Stored}, \text{Transmitted}, \text{Processed}\}$$

D is the Data dimension's property set.

$$R = \left\{ \begin{array}{l} \text{Co-operational}, \\ \text{Deniable}, \\ \{\text{Full}, \text{Partial}\}_{\text{Degree}} \end{array} \right\}$$

R is the property/capability set of the Reversibility dimension.

$$A = \left\{ \begin{array}{l} \text{Behavior}, \\ \text{Content}, \\ \{ANO, PSEUDO\}_{\text{Ident}} \end{array} \right\}$$

$$ANO = \left\{ \{\text{Single}, \text{Multi}\}_{\text{Direct}} \right\}$$

$$PSEU = \left\{ \{\text{Single}, \text{Multi}\}_{\text{Direct}}, \{\text{Individual}, \text{Group}\}_{\text{Hold}}, \{\text{Limited}, \text{Unlimited}\}_{\text{Card}} \right\}$$

A is the Aspect dimension's property set. For easier readability, the subdimensions Anonymity (ANO) and Pseudonymity (PSEUDO) are defined as subsets but follow the same label convention like the privacy goals. Hence,

$$\text{Single}_{\text{Ident}_{\text{Ano}_{\text{Direct}}}}.$$

the identity aspect of single directed anonymity may be written as

F is the Foundation dimension's property set. Analogue to the previous definition, the subdimension "Category" has depth bigger than two, hence a subset CAT is introduced.

$$T = \left\{ \begin{array}{l} \{\text{Situational, Permanently}\}_{\text{Freq}}, \\ \{\text{Setup, Regular}\}_{\text{Phase}}, \\ \{\text{Validation, Operation}\}_{\text{Task}} \end{array} \right\}$$

T is the TTP dimension's property set.

$$S = \{\text{Untrusted Client, Untrusted Server, External}\}$$

S is the Scenario dimension's property set.

For simplicity, the subscripted labels of the elements are abbreviated (Conf., Aware., etc.). The notion of $\{\{x_1, x_2, ..., x_n\}_{\text{Label}}\}$ shall be the short form of $\{x_{1_{\text{Label}}}, x_{2_{\text{Label}}}, ..., x_{n_{\text{Label}}}\}$.

Technically, goal strengths are determined by the corresponding PET's configuration, e.g. k-anonymity provides weak indistinguishability for a small k, but strong for a big k. Such cases may be supported with "virtual" PETs that reflect the different strength levels. An example configuration of k-anonymity could exist as w-k-anonymity ($1_{\text{Indis}} \in G$ with k = 10), m-k-anonymity ($2_{\text{Indis}} \in G$ with k = 100) and s-k-anonymity ($3_{\text{Indis}} \in G$ with k = 1000).

The complete taxonomy model may be defined as follows:

Definition

The PET Taxonomy Model (PTM) is an 8-tuple of sets:

$$PTM = (P, G, D, R, A, F, T, S)$$

similar to the taxonomy dimension classification, PTM components may be classified as:

Definition

Property-set components = {P, D, A, F, T, S}
Capability-set components = {G, R}

Definition

$$\mathscr{P}(PTM) = (\mathscr{P}(P), \mathscr{P}(G), \mathscr{P}(D), \mathscr{P}(R), \mathscr{P}(A), \mathscr{P}(F), \mathscr{P}(T), \mathscr{P}(S))$$

$$\mathscr{P}(PTM) = PTM' = \left(P', G', D', R', A', F', T', S'\right)$$

PTM', the space of all possible PETs, is defined as:

where $P$ denotes the power set and the apostrophe in PTM' components shall be used as short notation herein. Intuitively, this models the set of all possible PET characteristic combinations. According to one embodiment, although this is not intended to be limiting, the power sets $P(G)$ and $P(R)$ contain sets with multiple goal/reversibility strengths/degrees and the same label; e.g., $\{5_{\text{Co-op}}, 1_{\text{Co-op}}\} \in (G)$

Definition

The identity element $P_0 \in PTM'$ is defined as:

$$P_0 = (\{\}, \{\}, \{\}, \{\}, \{\}, \{\}, \{\}, \{\}) \text{ or simply } \varnothing$$

Definition

| | | |
|---|---|---|
| $p$ : PTM' → $P'$ | Set of Principles of a PET $P \in$ PTM' |
| $g$ : PTM' → $G'$ | Set of privacy Goals of a PET $P \in$ PTM' |
| $d$ : PTM' → $D'$ | Set of Data characteristics of a PET $P \in$ PTM' |
| $r$ : PTM' → $R'$ | Set of Reversibility characteristics of a PET $P \in$ PTM' |
| $a$ : PTM' → $A'$ | Set of Aspects of a PET $P \in$ PTM' |
| $f$ : PTM' → $F'$ | Set of Foundations of a PET $P \in$ PTM' |
| $t$ : PTM' → $T'$ | Set of TTP characteristics of a PET $P \in$ PTM' |
| $s$ : PTM' → $S'$ | Set of Scenario characteristics of a PET $P \in$ PTM' |

Basic selector functions:

COMPOSITIONAL PET ALGEBRA

Definition

Combination of properties typically includes a relation on property-(sub)dimensional PTM characteristics using naive set union (U)

Composition of capabilities typically includes a relation on capability-(sub)dimensional PTM characteristics using a C-constrained set union (U$_C$), where C is defined for the individual capability dimension.

Typically, the composition-function, is a union of the PETs' dimensions.

Optionally, this composition-function may be adjusted to reflect real-life constraints, when implementing the combination of multiple PETs, that are use-case specific. For example:

- Umin and Uto as defined herein are used for the weakest link composition over the Goal dimension thereby to allow operation under an safe assumption that, say, We have a Confidentiality level of at least x" where Confidentiality is one of the Goals .

- Umax may be derived from Umin by exchanging the min operator by the max operator in the definition for Umin provided herein, or Uot may be derived from Uto by swapping the terms partial and full in the definition for Uto provided herein. Together they build the strongest link composition over Goals thereby to support a clear limit statement such as "We have a Confidentiality level of at most x"

- Uavg (average) may be constructed from Umin by exchanging the min operator by an averaging operator (such as but not limited to: arithmetic mean, geometric mean, etc.) in the given definition of Umin. This then constitutes the average goal strength composition, thereby to support an estimation statement such as "We have a Confidentiality level of around x"

- the constrained union may be a cumulative union, where the respective (number) values are summed up e.g. in scenarios with a Cost dimension, when it is desired to compute an overall cost of the combined PETs.

- 

In a framework with such PETs as plugins with defined interfaces, the resulting privacy properties of an overall system which may include combinations of PETs, may be estimated based on the privacy metric shown and described herein which is derived from the algebra.

The PET algebra <PTM', $\Sigma$> is typically defined as: A tuple of the PET-space (PTM') is a universal set and typically the signature $\Sigma = (\oplus)$, containing typically one binary operation $\oplus$ on PTM'. Short: <PTM', $\oplus$>.

PTM' element composition typically results in another PTM' element. The relation is typically defined, as characteristic combination and composition of its terms.

Definition

$\oplus : PTM' \times PTM' \to PTM'$
$\oplus : (P',G',D',R',A',F',T',S') \times (P', G', D',R',A', F', T', S') \to (P', G', D',R',A', F', T', S')$

$$A \oplus B = (P'_A, G'_A, D'_A, R'_A, A'_A, F'_A, T'_A, S'_A) \oplus (P'_B, G'_B, D'_B, R'_B, A'_B, F'_B, T'_B, S'_B)$$
$$= (P'_A \oplus P'_B, G'_A \oplus G'_B, D'_A \oplus D'_B, R'_A \oplus R'_B, A'_A \oplus A'_B, F'_A \oplus F'_B, T'_A \oplus T'_B, S'_A \oplus S'_B)$$

A $\oplus$ B with A; B $\in$ PTM' is typically defined as:

Weakest Link Constraint Composition

Definition

For all A; B $\in$ PTM' the weakest link constrained composition w may for example be

$$\oplus : \begin{pmatrix} P' \times P' \to \left\{ P \in P' \mid \forall P_1, P_2 \in P' : (P = P_1 \cup P_2) \right\}, \\ G' \times G' \to \left\{ G \in G' \mid \forall G_1, G_2 \in G' : (G = G_1 \cup_{\min} G_2) \right\}, \\ D' \times D' \to \left\{ D \in D' \mid \forall D_1, D_2 \in D' : (D = D_1 \cup D_2) \right\}, \\ R' \times R' \to \left\{ R \in R' \mid \forall R_1, R_2 \in R' : (R = R_1 \cup_{\text{to}} R_2)) \right\}, \\ A' \times A' \to \left\{ A \in A' \mid \forall A_1, A_2 \in A' : (A = A_1 \cup A_2) \right\}, \\ F' \times F' \to \left\{ F \in F' \mid \forall F_1, F_2 \in F' : (F = F_1 \cup F_2) \right\}, \\ T' \times T' \to \left\{ T \in T' \mid \forall T_1, T_2 \in T' : (T = T_1 \cup T_2) \right\}, \\ S' \times S' \to \left\{ S \in S' \mid \forall S_1, S_2 \in S' : (S = S_1 \cup S_2) \right\} \end{pmatrix}$$

defined as:
For every property-dimension, $\oplus$ may be defined as set-union (combination). And for every capability dimension (Goal and Reversibility) this symbol may be defined as constraint union ($\cup_{\min}$ and $\cup_{TO}$).
With the exception of Goal and Reversibility, all other dimensions are typically conventionally united (e.g. simple set union) for the resulting composed PET (i.e. the result of applying the PET-algebra), aka the PET-system (PETS). This design decision induces the possibility to list properties of a composed PET system and preserves the original PET characteristics, a

Definition

$\forall a_{l_i}, b_{l_j} \in G_1, G_2 \wedge \forall G_1, G_2 \in G' \wedge \forall l_i, l_j \in GLABEL$ :

$$G_{i,j} = \begin{cases} \{\min(a_{l_i}, b_{l_j})\} & l_i = l_j \\ \{a_{l_i}\} \cup \{b_{l_j}\} & l_i \neq l_j \end{cases}$$

$$\cup_{\min} = \bigcup_{\min_{i=1,j=1}}^{|G_1|,|G_2|} G_{i,j}$$

Minimum goal strength composition $\cup_{\min}$ for all $G_i, G_2 \in G'$ is typically defined as:
Intuitively, the Goal sets may be united, typically, with a minimum strength level restriction. $\cup_{\min}$ is a set union, where the "smallest" elements of the same label may be selected. e.g. $\{1_{conf}, 2_{Aware}\} \oplus \{3_{conf}, 3_{Indis}\} = \{1_{conf}, 2_{Aware},$

$3_{Indis}$}. This decision typically means, though, that PETs with the same goals, but weaker strength levels semantically taint the composed system. Hence, privacy goals of the composition are typically downgraded in this embodiment.

Definition

Maximum reversibility degree composition $U_{TO}$ (or Uto) for all $R_1, R_2 \in$ R' is typically $\forall a_{l_i}, b_{l_j} \in R_1, R_2 \wedge \forall R_1, R_2$ R' $\wedge \forall l_i, l_j \in$ {Degree, Co-operational, Deniable} :

$$R_{i,j} = \begin{cases} \{a_{l_i}\} \cup \{b_{l_j}\} & (l_i \neq \mathrm{Degree} \wedge l_j \neq \mathrm{Degree}) \\ \{\mathrm{Full}\} & (l_i = \mathrm{Degree} \wedge l_j = \mathrm{Degree} \wedge a_{l_i} = b_{l_j} \wedge a_{l_i} = \mathrm{Full} \\ \{\mathrm{Partial}\} & (l_i = \mathrm{Degree} \wedge l_j = \mathrm{Degree} \wedge a_{l_i} \neq \mathrm{Full} \wedge b_{l_j} \neq \mathrm{Full} \end{cases}$$

$$\mathsf{U}_{\mathrm{TO}} = \bigcup_{\mathrm{to}_{i=1,j=1}}^{|R_1|,|R_2|} R_{i,j}$$

defined as:
Reversibility is typically a hybrid PET dimension containing properties (co-operational and deniable) and capabilities (Degree). Intuitively, the Reversibility sets are typically united for their properties and for their capabilities with a trade-off (TO). The degree typically has two capability states: fully and partially. $U_{TO}$ computes their logical conjunction, e.g. composition of a fully reversible PET {$Full_{Degree}$} with a co-operational, deniable and partial reversible PET {$Partial_{Degree}$, Deniable, Co-operational}, results in {Co-operational, Deniable, $Partially_{Degree}$}.

Privacy Metric

With the previously defined algebra, PETs may be formally composed. Resulting PET systems typically contain, among others, composed goal characteristics that may be used to describe and estimate an underlying IT systems enforced privacy. The description herein relates to utilization of the Goal characteristics by way of example, but the description is applicable to other or all characteristics.
The algebra is typically used to derive an enforceable privacy metric, that measures which privacy requirements are minimally covered by a combination of PETs, when used in an application-to-service data flow.

Definition

Privacy : PTM' $\rightarrow$ [0,1)

$$\mathrm{Privacy}(P) = \frac{gs(P)}{|G|}$$

$$\mathrm{Goal\ Score\ } gs(P) = \sum_{i=0}^{|g(P)|} s(x_i)$$

$g$ :PTM' $\rightarrow$ $G$'
Enforced privacy metric for a PETS P may be:
$x_i \in g(P)$ is the i-th goal's strength; gs(P) is the strength level weighted number of goals for a PETS P and |G| the maximum count of possible privacy goals in PTM.

STR is defined as $\mathbb{N}$ and is open. For the metric, it must be closed STR*. e.g. an IT system using the model

$$\mathrm{STR}^* = \{s \in \mathbb{N} \mid 1 <= s <= 3\}.$$

only with the strength levels weak (1), medium (2) and strong (3), the subset
Alternatively, instead of limiting the subset STR* to a predefined maximum (3 in the case above) the highest actually occurred Strength may be used as limiting element.
Metrics for other PET dimensions may be defined analogously e.g. as follows: For capabilities that are quantified over number sets, such as {1,2,3}, N, R, Q, the formulas given above may be re-utilized (working on the capability in scope instead of G). For capabilities that are quantified over non-number sets, a bijective mapping to a number set may be applied to make that capability quantified over a number set. For properties may be treated as capabilities by assigning quantifiers to their values, then, and this way metrics may be computed as shown herein for capabilities.

Use cases include but are not limited to:

- User Profiling
- Personal Moments Detection
- User Behavioral Analytics
- User Activity Recognition
- Scoring systems in sport events
- Mood Detection
- Style Detection
- Remote Participation
- Targeted advertisements/campaigns and promotions
- Community Building

It is appreciated that the description herein is in some ways specific, for clarity, to user centric privacy scenarios in (Social) IoT scenarios such as Quantified Self-based analytics. However, the combiner system shown and described herein may also be employed in group centric privacy scenarios such as but not limited to community deriving or establishment and/or to non-privacy scenarios such as machine or traffic monitoring with contextual data gathering restrictions.

Advantages of certain embodiments include that PET and Privacy Models are formalized using a flexible, general model including a formal PET algebra and composition, and are not specific to any particular definition of privacy or any particular privacy goals. Privacy metrics are general, rather than being tailored to specific domains.

Conventional PET and Privacy Model technologies may be combined with the teachings herein, such as but not limited to the conventional PET and Privacy Model technologies described in references A - F set out in the Background section, above.

For example, Heurix et al. propose a generic multi-dimensional PET taxonomy [A] to compare previously-thought incomparable PETs. Their model does not formalize the taxonomy, nor investigate composition of PETs such that combining with the relevant taxonomy formalization and/or composition investigation teachings herein is advantageous.

Other related formal models which are privacy definition specific and may formalize specific privacy goals and typically relations there between, may also be combined with the teachings herein. For example, the work of Pfitzmann [B] defines many privacy notions and their relationships, such as anonymity and observability. Bohli et al. [C] unify anonymity, pseudonymity, unlinkability, and indistinguishability. Backes et al. [D] analyze and quantify anonymity properties in a formal framework. A generalizing Pi-calculus based privacy model is described by Dong et al. [E] to enforce user privacy even when the user is collaborating with the adversary. Kifer et al. [F] define a formal framework to create new application-specific privacy definitions. These works are applicable to only a subset of PETs, privacy goals or definitions, but may be combined with the teachings shown and described herein.

Conventional PET Composition technologies may be combined with the teachings herein, such as but not limited to the following PET Composition technologies: [G] Yannis Tzitzikas, Anastasia Analyti, Nicolas Spyratos, and Panos Constantopoulos, [2004], An algebraic approach for specifying compound terms in faceted taxonomies. In Information Modelling and Knowledge Bases XV, 13th European- Japanese Conference on Information Modelling and Knowledge Bases, EJC'03. 67-87.

[H] Dominik Raub and Rainer Steinwandt. 2006. An algebra for enterprise privacy policies closed under composition and conjunction. In Emerging Trends in Information and Communication Security. Springer, 130-144.

In particular, Tzitzikas et al. propose a general composition algebra for faceted taxonomies [G] but this approach requires prior declaration of invalid compositions, hence may be improved by suitable combining with the teachings herein. Raub et al. define algebra to compose privacy policies [H] yet their approach is specialized to policy composition and does not include a formal PET algebra or composition, hence may be improved by suitable combining with the teachings herein.

Conventional Privacy metrics technologies may be combined with the teachings herein, such as but not limited to the following Privacy metrics technologies:

[I] Latanya Sweeney. 2002. k-anonymity: A model for protecting privacy. International Journal of Uncertainty, Fuzziness and Knowledge-Based Systems 10, 05 (2002), 557-570.

**EP 3 367 290 A1**

[J] Andrei Serjantov and George Danezis. 2002. Towards an information theoretic metric for anonymity. In Privacy Enhancing Technologies. Springer, 41-53.

[K] Sebastian Clauß and Stefan Schiffner. 2006. Structuring Anonymity Metrics. In Proceedings of the Second ACM Workshop on Digital Identity Management (DIM '06). ACM, New York, NY, USA, 55-62.

[M] David Rebollo-Monedero, Javier Parra-Arnau, Claudia Diaz, and Jordi Forné. 2013. On the measurement of privacy as an attackers estimation error. International Journal of Information Security 12, 2 (2013), 129-149.

It is known that metrics may be defined based on set-size, probability, entropy or Euclidean distance, e.g., for indistinguishability and anonymous communication. For example, the size of a subject set wherein an individual subject is not identifiable [B]. This anonymity-set metric is applicable to Mix-Nets and DC-Nets. Indistinguishability may be measured with set and distance metrics as well, e.g., k-anonymity [I]. Probability and entropy-based metrics such as the Shannon [J] or Rényi entropy [K], enable modeling of additional attacker knowledge to measure information-theoretic privacy. Rebollo et al. [M] propose a theoretical framework endowed with a general privacy definition in terms of the estimation error incurred by an attacker. Yet set-based privacy metrics are not applicable in arbitrary privacy domains and lack fine-grained attacker knowledge modeling. Indistinguishability based approaches have weaknesses against attackers capable of running statistical de-anonymization attacks resulting in reduced anonymity sets. Entropy approaches are heavily influenced by outliers. Therefore, each of these technologies may be improved by suitable combining with the teachings herein.

One of the many applications for the methods and systems shown herein is for Internet of things. IoT maps the real world into the virtual world with unique identifiable physical objects to virtual resources. RFID, Auto-ID and optical tags such as QR- or barcodes are among the technologies that may be employed to achieve this. Passive RFID and NFC chips in credit cards, door access cards or retail items may be used for tagging, identification and tracking of people and items. Interactions between objects, people, and the surrounding environment are captured via passive/active sensors and transferred with semantic analytics services to physical actuators and visual presentation. Autonomous, physical world events are reflected by virtual world events, e.g., haptic events with actuators or cognitive events with knowledge visualization, e.g. autonomous industrial control (Industry 4.0, SCADA), sensors for detecting pollution, radiation etc. (smart city and environment), participatory sensing with smartphone sensors e.g., microphone, gyroscope, and location, but also cloud-based service architectures and social networks with virtual entities and events. Any suitable communication technologies and protocols may be employed. For example, Classical client-server and P2P communication may be used to connect devices and services over the Internet. Wireless physical layer communication technologies enable dynamic, mobile, M2M networks such as WSN, RSN, Mobile Ad Hoc Network (MANET), Vehicular Ad Hoc Network (VANET) and hybrid cloud-based infrastructures. Wireless technologies from low to high power consumption and connectivity range include NFC, Bluetooth (low energy), WiFi, WiMax, WiFi-Direct, ZigBee, Z-Wave, 3G, 4G, and LTE-Advanced. When end-to-end connections are established on lower TCP/IP layers, specialized application layer protocols may be employed, such as but not limited to RESTful HTTP or event-based/real-time protocols such as MQ Telemetry Transport (MQTT), Extensible Messaging and Presence Protocol (XMPP) and Web-Sockets.

Privacy Enhancing Technology (PET) systems are applicable to IoT inter alia and applicability may be improved using the methods shown and described herein e.g. to provide advanced IT systems using multiple PETs. These systems' privacy may or may not be quantified with a set-based privacy metric e.g. as described herein. Such systems are advantageous relative to conventional PETs such as, say, Tor's anonymous network communication or Differential Privacy-based privacy preserving analytics. The contextual and policy-based privacy architecture for IoT infrastructures shown and described herein is however merely by way of example, particularly since applicability of the PET taxonomy-based embodiments and algebra-based PET composition methods shown and described herein are not limited to mobile IoT or to IoT at all.

Example PETs that may be composed or combined, using methods shown and described herein, are described e.g. in the Heurix publication mentioned herein. Examples include:

Classical k-anonymity proposed by Sweeney, with its two well-known extensions, 1-diversity (Machanavajjhala) and t-closeness (Li et al);

Private information retrieval (PIR) proposed by Chor et al);

Oblivious transfer, e.g. a protocol proposed by Rabin, that allows the transfer of a secret between a sender and a receiver without the sender knowing what the receiver has received;

Boneh scheme which allows an untrusted server to verify the existence of an encrypted keyword that has been encrypted with a receiver's public key by a sender.

Proxy re-encryption e.g. cryptographic protocol proposed by Blaze et al which allows the re-encryption of data by a third party so that the data initially encrypted with the sender's public key may then be decrypted with the receiver's private key, without the third party having access to any of the secret keys or the data's content;

Ateniese et al., proxy re-encryption used as a basis for a secure file system;

Deniable encryption e.g. by Canetti et al;

Steganography operative for hiding the content of a piece of data, including hiding the existence of sensitive data by embedding or encoding the data within uncritical carrier data e.g. as proposed by Katzenbeisser and Petitcolas; and

Mix Net e.g. as proposed by Chaum, for anonymized communication between sender and receiver based on encapsulation of a message with multiple encryption layers to hide the message's route, combined with mixing the messages (sequence, delay, dummy traffic).

Techniques to hide the identity of individuals by application of group signatures, as proposed by Chaum, e.g. a group signature scheme, where members of the group are able to create a valid signature while the actual individual is kept hidden from the verifier, including the version with fixed-size public key proposed by Camenisch and Stadler.

Anonymous credential system, by proving the possession of a certain credential without disclosing the user's identity, introduced by Chaum in 1985 in which sender uses different pseudonyms for communication with a credential provider and a credential receiver, where the pseudonym for the receiver is blinded before it is sent to the credential provider;

Tor Browser which makes available the Tor anonymization framework by providing an easy-to-use Tor- enabled web browser;

PET tools added to existing web browsers as plugins such as HTTPS Everywhere by The Tor Project and the Electronic Frontier Foundation (HTTPS Everywhere) or Privacy Bird or Ghostery, e.g., which identifies trackers on each visited web site and optionally blocks them to hide the user's browsing habits;

End-user PETs including GNU Privacy Guard (GnuPG or GPG) which applies asymmetric and symmetric cryptography to messages and data to primarily encrypt the content of emails. This also includes a key management system based on the web-of-trust concept;

Data-at- rest PETs such as disk-encryption tools e.g. Truecrypt which allows both creating encrypted disk volumes or full-disk-encryption.

Typically, although not necessarily, Privacy(P) is the privacy score between [0,1] of an IT system using the PETS P where zero is defined to mean that none, or only PETs without privacy goals, are applied such that no technological provisions at all are provided, for the benefit of customers and service providers and other end-users of such an IT system. Conversely, a score of one may be defined to mean maximal technical guaranteed privacy where all possible PET-based privacy technologies, mechanisms and/or privacy goals described herein are covered by the PETs deployed in the IT system. A particular advantage of certain embodiments is that this may occur even if the IT system was not designed a priori using "privacy by design" principles or other privacy policy compliance mechanisms, and, nonetheless, the resulting privacy is maximal. Typically, the privacy metric assumes that the PETs in P are correctly deployed in the system to enforce the respective privacy goals of each PET.

It is appreciated that, typically, the PET description input to the PET combiner of Fig. 5 comprises a nested attribute-value pair based representation (using a suitable predefined format for attribute-value pair based representation -- such as JSON or XML - and nested structures) of each of 2 or more privacy-enhancing technologies (any technical measure applied to data to preserve privacy of individuals or groups to whom the data pertains) which may be combined, where each attribute is an element of a PET taxonomy, such as that shown in Figs. 7a - 7b the PET system description output of Fig. 5, comprises an attribute-value pair based representation (using a suitable predefined format such as JSON or XML), derived automatically by the system of Fig. 5, of a PET which comprises a composition of all of the two or more privacy-enhancing technologies whose descriptions were input to the system of Fig. 5, where each attribute is again an element of a PET taxonomy such as that shown in Figs. 7a - 7b, taken together. A composition or combination of all of two or more privacy-enhancing technologies (aka "raw" PETs) is defined as application of all the raw technologies to a single body of data or application of all of the raw PETs to each data record in the body of data. A particular advantage of certain embodiments is the ability to compute whether or not, by applying several "raw" PETs, all privacy goals, fulfilled by the individual or raw PETs, are still fulfilled by the several PETs combined.

It is appreciated that in the taxonomy of Figs. 7a - 7b, taken together, the PETs are set based e.g. a PET is a set of attributes (P,G,D,R,A,F,T,S), each attribute being represented by a set of possible values, where values may themselves be sets and so on. On the interface level, the taxonomy may, if desired, be translated to JSON structures where each JSON structure is a tree of nested attribute-value pairs.

While JSON is one suitable representation of a set based PET system, JSON is merely exemplary. For example, JSON may not be used at all, or may be used for an API (e.g. API for exporting data structures) but not to store the taxonomy in memory, to represent the taxonomy in memory, set constructs provided by the utilized programming language may be employed, since JSON is usually not optimal, such as but not limited to

- Java - java.util.set
- Python - Set
- C++ - std::set
- Ruby - set

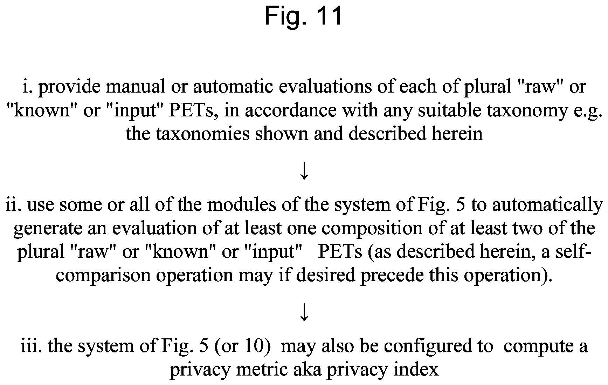

It is appreciated that the specific embodiments shown and described herein are merely exemplary. More generally, the following method (fig. 11) may be practiced:

i. provide manual or automatic evaluations of each of plural "raw" or "known" or "input" PETs, in accordance with any suitable taxonomy e.g. the taxonomies shown and described herein

ii. use some or all of the modules of the system of Fig. 5 to automatically generate an evaluation of at least one composition of at least two of the plural "raw" or "known" or "input" PETs (as described herein, a self-comparison operation may if desired precede this operation).

iii. the system of fig. 5 (or 10) may also be configured to compute a privacy metric aka privacy index, typically a scalar, shown by way of example herein using the Goal attribute or dimension, although this is not intended to be limiting.

This index typically indicates the level of privacy achieved by the composition of "input" PETs, typically relative to a maximum achievable level defined by what is representable by the taxonomy, i.e. the number of possible values for the dimension in which we compute the privacy index. For example, consider a privacy index for "goal" dimension assuming a combined PET with the following goals

- Trust 3

- Awareness 2

There are 7 different privacy goals, by way of example, in the taxonomy of Figs. 7a - 7b (Indistinguishability, Unlinkability, Trust, ...). Or, the configuration may assume 8 possible values for "goal", as "unlinkability" splits into "Participants" and "Usage".
The highest Strength in the combined PET may be the reference for normalization: Normalization reference = 3. Then normalize all Strength in the combined PET using the reference

- Trust 3/3 and Awareness 2/3
  Now, sum these and divide by the number of goals in the taxonomy to yield the following index: Index = (3/3 + 2/3) / 7 = 0.238

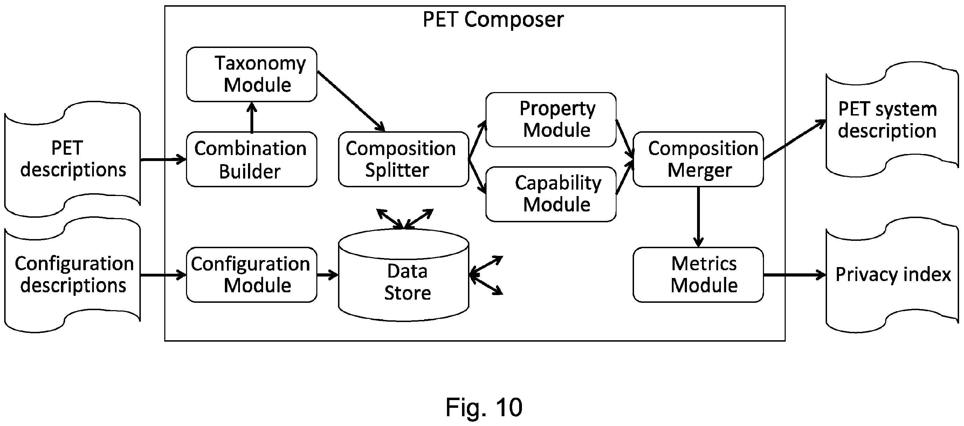

So, typically, there is a normalization step involved. If the Strength is defined over an infinite set (e.g. the natural numbers in the case at hand), the highest occurred Strength may be used as the reference. If the Strength set is finite, the highest possible Strength may be the reference for normalization.
Typically, a user has the possibility to select the privacy policies he deems adequate from various available policies which may be presented via a GUI e.g. as a list. By selecting the policies, the user defines his requirements, since, for example, if the user has very relaxed privacy requirements he may express that by selecting a very relaxed policy and conversely, if the user has very strict privacy requirements, he selects a very strict policy. Typically, given the policies selected by the user, and typically after a negotiation process, the middleware shown and described herein automatically selects the appropriate PETs to implement / enforce this policy. These PETs may then be combined using the algebra shown and described herein, yielding the level of privacy defined by the policy.
It is appreciated that a system such as the system of Fig. 5 which expects exactly two PETs as input may also be used to handle 3 or more generally n PETs as input including building all the possible combinations, i.e., for the case, n = 3, 1+2, 1+3, 2+3, and 1+2+3. For example, the functionality of the system of fig. 5 may be executed, by calling the system of Fig. 1 for each possible 2 pair combination separately. Thus, given 2 input PETs the system may compute attributes for 1 combined PET which may then be used as input for the next round of combination, being in the same format as the input. For a 3 pair combination, the multi-step process may be this: call the system of Fig. 5 (aka S1) with the first two input PETs, yielding a result, then call S1 again to combine the result and the 3rd input PET. The "do all combinations" feature may be implemented by adding a "Combination Builder" module (Fig. 10), typically at the entry point to the system of Fig. 3, that performs this multi-step process, e.g. by prior configuration, or responsive to an input which indicates which of all possible combinations to build. Alternatively, the functionality of the combination builder may be incorporated into the Taxonomy Module. Fig. 10 is a system which includes the combination builder but is not, of course, necessarily the most efficient architecture; the architecture may if desired be optimized conventionally.

An advantage of the above flow is that PETs whose operation is well enough known to enable their evaluation in accordance with the taxonomy of Figs. 7a and 7b, taken together, even manually, may be used as building blocks to generate compositions of PETs. Such compositions are only useful if their privacy properties may be described, enabling end-users to select a composition suitable for their privacy requirements, by automatic or even by manual comparison between these compositions. Yet due to interactions between PETs, even a human expert or expert system capable of evaluating each of plural PETs, is not necessarily capable of directly evaluating a composition of the plural PETs. The system of Fig. 5 enables any composition or combination or superposition, of all or any subset of the plural PETs, to be evaluated. Then, an end-user may select a composition of PETs to suit her or his requirements. For example, the system of Fig. 5 may be used to evaluate, in accordance with the taxonomy of Figs. 7a and 7b, taken together, all possible compositions of n known PETs, thereby to generate evaluations for each of a total of t possible compositions, where t is:

$$t = \sum_{k=2}^{n} \frac{n!}{(n-k)! * k!}$$

The system may include a display generator operative to generate a table or graph or any other description of any or all compositions in which the end user is interested, e.g. as shown in the examples of Figs. 8a, 8b which may serve as an example display of the privacy properties of a hypothetical second composition of other PETs.

It is appreciated that this system would allow an end-user a larger selection or libraries of PETs from which to choose on an informed basis (i.e. in accordance with each PET's properties according the taxonomy of Figs. 7a and 7b, taken together.

Each combination of PETs itself constitutes a PET, in effect, even though the PETs (e.g. programs, networks, libraries) are executed separately, one after another and even though the individual PETs need not be co-located on a single node in a communication network and instead may be scattered over the network. So, this system provides data regarding not only each of p plural "raw" or "known" or "input" PETs, but also regarding some or all compositions of the p PETs - yielding, in total, a large number of PETs whose properties according the taxonomy of Figs. 7a and 7b, taken together are all generated automatically, once the properties according the taxonomy of Figs. 7a and 7b, taken together of each of the raw PETs, is provided externally, either automatically or manually.

It is appreciated that references herein to the taxonomy of figs. 7a - 7b are not intended to be limiting since elements of the taxonomy may be cut and/or augmented and/or swapped. In particular, entire dimensions/sub-trees may be deleted. Or, when deleting a dimension, the dimension's descendant nodes may if desired be connected to node/s in the taxonomy tree that have not been deleted or deemed a dimension of their own. And/or it is possible to add or remove nodes within each dimension i.e. below each dimension node. E.g. A goals dimension may be provided with only three nodes "Trust", "Awareness", "Deniability" which may suffice for given purposes or use-cases. Or a goals dimension with 9 nodes may be suitable for other use-cases. Also, new dimensions each of which may be property or capability or hybrid may be added. In the former case, a regular set union is typically added to the algebra, whereas in the latter case, a constrained union is typically added to the algebra. An example would be adding a "Cost" dimension, to reflect monetary implications, thereby typically giving rise to yet another constrained union: additive, e.g. instead of min, max, or average, sum up all the costs of the individual PETs to compute the cost of the resulting PET. It is also possible to convert property dimensions into capabilities and vice versa, typically also introducing a respective change in the algebra, i.e. the corresponding regular set union/s become constrained or vice versa. It is also possible to define a dimension's node as a dimension on its own (or vice versa - to re-define a dimension as a node of another dimension) e.g. removing "unlinkability" from the goals dimension and making "unlinkability" a new dimension, perhaps maintaining "unlinkability"'s sub-nodes "Participants" and "Usage".

References to the taxonomy of Figs. 7a- 7b should therefore be regarded as exemplary unless the description demands otherwise, and should be understood as including any tree structure (e.g. no cycles, exactly one graph, and dedicated root node) wherein a suitable union is defined in the algebra in accordance with the teachings herein, e.g. a set union for each property defined and/or a constrained union for each capability defined.

A particular advantage of certain embodiments is that end-users do not (or need not since the system herein may be configured to allow users to choose to do this as an option for advanced users) directly upload or deal with PET descriptions in any way; instead PET descriptions are handled internally.

It is appreciated that terminology such as "mandatory", "required", "need" and "must" refer to implementation choices made within the context of a particular implementation or application described herewithin for clarity and are not intended to be limiting since in an alternative implementation, the same elements might be defined as not mandatory and not required or might even be eliminated altogether.

Components described herein as software may, alternatively, be implemented wholly or partly in hardware and/or firmware, if desired, using conventional techniques, and vice-versa. Each module or component or processor may be centralized in a single physical location or physical device or distributed over several physical locations or physical devices.

Included in the scope of the present disclosure, inter alia, are electromagnetic signals in accordance with the description herein. These may carry computer-readable instructions for performing any or all of the operations of any of the methods shown and described herein, in any suitable order including simultaneous performance of suitable groups of operations as appropriate; machine-readable instructions for performing any or all of the operations of any of the methods shown and described herein, in any suitable order; program storage devices readable by machine, tangibly embodying a program of instructions executable by the machine to perform any or all of the operations of any of the methods shown and described herein, in any suitable order i.e. not necessarily as shown, including performing various operations in parallel or concurrently rather than sequentially as shown; a computer program product comprising a computer useable medium having computer readable program code, such as executable code, having embodied therein, and/or including computer readable program code for performing, any or all of the operations of any of the methods shown and described herein, in any suitable order; any technical effects brought about by any or all of the operations of any of the methods shown and described herein, when performed in any suitable order; any suitable apparatus or device or combination of such, programmed to perform, alone or in combination, any or all of the operations of any of the methods shown and described herein, in any suitable order; electronic devices each including at least one processor and/or cooperating input device and/or output device and operative to perform e.g. in software any operations shown and described herein; information storage devices or physical records, such as disks or hard drives, causing at least one computer or other device to be configured so as to carry out any or all of the operations of any of the methods shown and described herein, in any suitable order; at least one program prestored e.g. in memory or on an information network such as the Internet, before or after being downloaded, which embodies any or all of the operations of any of the methods shown and described herein, in any suitable order, and the method of uploading or downloading such, and a system including server/s and/or client/s for using such; at least one processor configured to perform any combination of the described operations or to execute any combination of the described modules; and hardware which performs any or all of the operations of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any operation or functionality described herein may be wholly or partially computer-implemented e.g. by one or more processors. The invention shown and described herein may include (a) using a computerized method to identify a solution to any of the problems or for any of the objectives described herein, the solution optionally including at least one of a decision, an action, a product, a service or any other information described herein that impacts, in a positive manner, a problem or objectives described herein; and (b) outputting the solution.

The system may, if desired, be implemented as a web-based system employing software, computers, routers and telecommunications equipment as appropriate.

Any suitable deployment may be employed to provide functionalities e.g. software functionalities shown and described herein. For example, a server may store certain applications, for download to clients, which are executed at the client side, the server side serving only as a storehouse. Some or all functionalities e.g. software functionalities shown and described herein may be deployed in a cloud environment. Clients e.g. mobile communication devices such as smartphones may be operatively associated with, but external to, the cloud.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Any "if -then" logic described herein is intended to include embodiments in which a processor is programmed to repeatedly determine whether condition x, which is sometimes true and sometimes false, is currently true or false, and to perform y each time x is determined to be true, thereby to yield a processor which performs y at least once, typically on an "if and only if' basis e.g. triggered only by determinations that x is true and never by determinations that x is false.

Features of the present invention, including operations, which are described in the context of separate embodiments may also be provided in combination in a single embodiment. For example, a system embodiment is intended to include a corresponding process embodiment and vice versa. Also, each system embodiment is intended to include a server-centered "view" or client centered "view", or "view" from any other node of the system, of the entire functionality of the system, computer-readable medium, apparatus, including only those functionalities performed at that server or client or node. Features may also be combined with features known in the art and particularly, although not limited, to those described in the Background section or in publications mentioned therein.

Conversely, features of the invention, including operations, which are described for brevity in the context of a single embodiment or in a certain order, may be provided separately or in any suitable subcombination, including with features known in the art (particularly although not limited to those described in the Background section or in publications mentioned therein) or in a different order. "e.g." is used herein in the sense of a specific example which is not intended to be limiting. Each method may comprise some or all of the operations illustrated or described, suitably ordered e.g. as illustrated or described herein.

Devices, apparatus or systems shown coupled in any of the drawings may in fact be integrated into a single platform in certain embodiments or may be coupled via any appropriate wired or wireless coupling such as but not limited to optical fiber, Ethernet, Wireless LAN, HomePNA, power line communication, cell phone, Smart Phone (e.g. iPhone), Tablet, Laptop, PDA, Blackberry GPRS, Satellite including GPS, or other mobile delivery. It is appreciated that in the description and drawings shown and described herein, functionalities described or illustrated as systems and sub-units thereof may also be provided as methods and operations therewithin, and functionalities described or illustrated as methods and operations therewithin may also be provided as systems and sub-units thereof. The scale used to illustrate various elements in the drawings is merely exemplary and/or appropriate for clarity of presentation and is not intended to be limiting. Headings and sections herein as well as numbering thereof, is not intended to be interpretative or limiting.

**Claims**

1. A system configured to combine plural PETs, the system comprising:

   I. A user interface operative to provide evaluations of each of plural raw aka known aka input PETs, in accordance with a PET taxonomy comprising a tree defining ordered and unordered dimensions comprising sub-trees along which PETs are classified; and
   II. A processor configured to automatically generate an evaluation of at least one composition of at least two of the plural raw PETs.

2. A system according to claim 1 wherein the taxonomy is formalized using nested sets, thereby to generate a set-based formalized taxonomy in which each PET comprises a set of attributes each represented by a set of possible values and wherein at least one possible value itself comprises a set.

3. A method configured to combine plural data operators, the method comprising:

   I. Providing evaluations of each of plural raw aka known aka input data operators, in accordance with a data operator taxonomy comprising a tree defining ordered and unordered dimensions comprising sub-trees along which data operators are classified; and
   II. Providing a processor configured to automatically generate an evaluation of at least one composition of at least two of the plural raw data operators.

4. A method according to claim 3 wherein the data operators comprise PETs.

5. A computer program product, comprising a non-transitory tangible computer readable medium having computer readable program code embodied therein, the computer readable program code adapted to be executed to implement a method configured to combine plural data operators, the method comprising:

   I. Providing a user interface operative to provide evaluations of each of plural raw aka known aka input data operators, in accordance with a data operator taxonomy comprising a tree defining ordered and unordered dimensions comprising sub-trees along which data operators are classified; and
   II. Providing a processor configured to automatically generate an evaluation of at least one composition of at least two of the plural raw data operators.

6. A system according to claim 2 wherein the processor uses an algebra, for composition of the plural PETs, which is defined on the formalized taxonomy.

7. A system according to claim 6 wherein the algebra automatically determines which attributes of raw PETs being combined, are preserved in a composition of the raw PETs by using at least one use-case specific constraint, introduced into the algebra thereby to allow for special composition behavior characterizing (or unique to) less than all use-cases.

**8.** A system according to claim 7 having at least one of the following characteristics:

the at least one use-case specific constraint comprises a Weakest link constraint W applied to at least one dimension of the taxonomy;
the Weakest link constraint W is applied to dimension R.

**9.** A system according to claim 7 wherein the Weakest link constraint W is applied to dimension G.

**10.** A system according to claim 9 wherein the Weakest link constraint W for dimension G comprises minimum goal strength composition (Umin).

**11.** A system according to claim 1 having at least one of the following characteristics:

the taxonomy defines privacy dimensions aka attributes and defines quantifiability of at least one dimension aka capability from among the dimensions where quantifiability comprises assigning one of at least 2 degrees or levels of strength to a capability;
the quantifiability of at least one dimension of the taxonomy uses at least one of the N, Q or R sets where R = real numbers, Q= rational numbers, N = natural numbers;
the quantifiability of at least one dimension of the taxonomy uses a set with a finite number of elements;
the user interface imports PETs including data structures represented using an attribute-value pair based representation;
service providers' end-users respective digital privacy is adjusted automatically during service-usage by negotiating PET combination/s and/or configuration policies;
the tree also comprises at least one hybrid dimension which is neither purely ordered nor purely unordered and or quantified or not quantified;
the system also comprises a Combination Builder.

**12.** A system according to claim 7 the Weakest link constraint W is applied to dimension R and wherein the Weakest link constraint W for dimension R comprises maximum reversibility degree composition (Uto).

**13.** A system according to claim 2 wherein the system is also configured to compute a privacy metric, from the formalized taxonomy, which computes strength achieved by all goals (dimension) in the combined PET relative to the maximum achievable goal strength.

**14.** A system according to claim 6 wherein the algebra is a commutative monoid.

**15.** A system according to claim 6 wherein an attribute-value pair based representation is used in an API to exchange data by exporting data structures represented using the attribute-value pair based representation from the system.

Fig. 1

Fig. 2

EP 3 367 290 A1

Fig. 3

Fig. 4

Fig. 5

Fig. 6

Fig. 7a

Fig. 7b

| Input PET 1 ID | ABC | | | |
|---|---|---|---|---|
| Input PET 2 ID | 123 | | | |
| Composed PET ID | ABC123 | | | |
| Privacy Index of Composed PET | 0.14 | | | |
| Composed PET | P | CONTROL | | | |
| | G | UNLINKABILITY | PARTICIPATION_HIDING USAGE_HIDING | 2 2 | |
| | D | PROCESSED | | | |
| | R | DEGREE | FULL | | |
| | A | IDENTITY | PSEUDONYMITY | DIRECT HOLD CARD | SINGLE INDIVIDUAL LIMITED |
| | F | SECURITY METHOD ATTACK METHOD THREAT MODEL CRYPTO PROTECTION DOMAIN | COMPUTATIONAL PFITZMANN CUSTOM ASYMMETRIC DEVICE CONNECTION CLOUD | | |
| | T | FREQUENCY PHASE TASK | SITUATIONAL REGULAR OPERATION | | |
| | S | UNTRUSTED SERVER | | | |

Fig. 8a

| Input PET 1 ID | A1B2 | | |
|---|---|---|---|
| Input PET 2 ID | C3D4 | | |
| Composed PET ID | E5F6 | | |
| Privacy Index of Composed PET | 0.5 | | |
| Composed PET | P | CONTEXT | |
| | G | TRUST<br>AWARENESS | 3<br>2 |
| | D | STORED | |
| | R | DEGREE | PARTIAL |
| | A | CONTENT | |
| | F | SECURITY METHOD<br>ATTACK METHOD<br>THREAT MODEL<br>CRYPTO<br>PROTECTION DOMAIN | COMPUTATIONAL<br>CUSTOM<br>CUSTOM<br>ASYMMETRIC<br>DEVICE |
| | T | FREQUENCY<br>PHASE<br>TASK | PERMANENT<br>SETUP<br>OPERATION |
| | S | UNTRUSTED SERVER | |

Fig. 8b

| Dimension | Description |
|---|---|
| **Properties** | |
| Principle | May be used to describe abstract and legal meta-functionalities like data minimization |
| Data | May be used to describe the data specific nature of the PET; e.g., whether applied on data in movement or in storage |
| Aspect | May be used to describe whether the PET is tackling identity, content or behavior privacy and mechanism details for anonymity and pseudonymity in case of identity |
| Foundation | May be used to describe the theoretical background with assumptions and requirements of the PET |
| TTP | May be used to describe involvement of a trusted third party in the PET's mechanism |
| Scenario | May be used to describe trust assumptions towards the assumed subjects Capability-Dimensions |
| **Capabilities or Hybrid** | |
| Goal | May be used to describe privacy goal capabilities of the PET and may be extended with ordered capability levels such as {weak, middle, strong}, N, Q, R |
| Reversibility | May be used to describe capability and/or property dimension of PETs. may be used to specify a degree (capability) to which the PETs process and result may be reversed. may provide the properties to express whether cooperation is needed for reversibility and/or whether the result is deniable or not. typically Reversibility is a mixed dimension, containing both capabilities and properties. |

Fig. 9

Fig. 10

EP 3 367 290 A1

# Fig. 11

i. provide manual or automatic evaluations of each of plural "raw" or "known" or "input" PETs, in accordance with any suitable taxonomy e.g. the taxonomies shown and described herein

↓

ii. use some or all of the modules of the system of Fig. 5 to automatically generate an evaluation of at least one composition of at least two of the plural "raw" or "known" or "input"  PETs (as described herein, a self-comparison operation may if desired precede this operation).

↓

iii. the system of Fig. 5 (or 10)  may also be configured to  compute a privacy metric aka privacy index

Europäisches
Patentamt

European
Patent Office

Office européen
des brevets

## EUROPEAN SEARCH REPORT

Application Number

EP 18 15 8954

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | SEBASTIAN FUNKE ET AL: "Constrained PET Composition for Measuring Enforced Privacy", AVAILABILITY, RELIABILITY AND SECURITY, ACM, 2 PENN PLAZA, SUITE 701NEW YORKNY10121-0701USA, 29 August 2017 (2017-08-29), pages 1-10, XP058370949, DOI: 10.1145/3098954.3098968 ISBN: 978-1-4503-5257-4 * Section 3-5; figure 1; tables 1, 2 * | 1-15 | INV. G06F21/60 |
| A | HEURIX JOHANNES ET AL: "A taxonomy for privacy enhancing technologies", COMPUTERS & SECURITY, ELSEVIER SCIENCE PUBLISHERS. AMSTERDAM, NL, vol. 53, 20 May 2015 (2015-05-20), pages 1-17, XP029264285, ISSN: 0167-4048, DOI: 10.1016/J.COSE.2015.05.002 * the whole document * | 1-15 | |
| A | RAUB DOMINIK ET AL: "An Algebra for Enterprise Privacy Policies Closed Under Composition and Conjunction", 6 June 2006 (2006-06-06), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047429723, ISSN: 0302-9743 ISBN: 978-3-642-38287-1 * the whole document * | 1-15 | TECHNICAL FIELDS SEARCHED (IPC) G06F |

The present search report has been drawn up for all claims

| Place of search | Date of completion of the search | Examiner |
|---|---|---|
| Munich | 13 June 2018 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62463874 B
- US 7072956 B2
- US 20130340086 A1
- US 7748026 B1
- US 8661500 B2
- US 20120259877 A1

### Non-patent literature cited in the description

- **JOHANNES HEURIX ; PETER ZIMMERMANN ; THOMAS NEUBAUER ; STEFAN FENZ.** A taxonomy for privacy enhancing technologies. *Computers & Security,* 2015, vol. 53, 1-17
- **ANDREAS PFITZMANN ; MARIT HANSEN.** Anonymity, Unlinkability, Undetectability, Unobservability, Pseudonymity, and Identity Management. *A Consolidated Proposal for Terminology,* 2008
- **JENS-MATTHIAS BOHLI ; ANDREAS PASHALIDIS.** Relations Among Privacy Notions. *ACM Trans. Inf. Syst. Secur.,* June 2011, vol. 14 (1), 24
- Praveen Manoharan, Sebastian Meiser, and Esfandiar Mohammadi. 2013. AnoA: A framework for analyzing anonymous communication protocols. **MICHAEL BACKES ; ANIKET KATE.** Computer Security Foundations Symposium (CSF). IEEE, 2013, 163-178
- Enforcing privacy in the presence of others: Notions, formalisations and relations. **NAIPENG DONG ; HUGO JONKER ; JUN PANG.** Computer Security- ESORICS. Springer, 2013, 499-516
- **DANIEL KIFER ; ASHWIN MACHANAVAJJHALA.** Pufferfish: A framework for mathematical privacy definitions. *ACM Transactions on Database Systems (TODS),* 2014, vol. 39 (1), 3
- **FUNKE et al.** *Constrained PET Composition for Measuring Enforced Privacy,* 2017
- **A OLTRAMARI ; D PIRAVIPERUMAL ; F SCHAUB et al.** *PrivOnto: A semantic framework for the analysis of privacy policies,* 2017
- PE-BPMN: Privacy-Enhanced Business Process Model and Notation. **P PULLONEN, R MATULEVICIUS, D BOGDANOV.** International Conference on. Springer, 2017
- **TIM DE KLERK.** *How to Measure Privacy: a Structured Overview of Analysis Methods for Privacy-Enhancing Technologies*
- **KIMMO HALUNEN ; ANNI KARINSALO.** Measuring the value of privacy and the efficacy of PETs. *Proceeding ECSA '17 Proceedings of the 11th European Conference on Software Architecture: Companion Proceedings,* 11 September 2017, 132-135
- **GAMMA, ERICH et al.** Design Patterns: Elements of Reusable Object-Oriented Software. Addison-Wesley, 1995
- Pattern-Oriented Software Architecture. **BUSCHMANN ; FRANK et al.** A System of Patterns. John Wiley & Sons, 1996, vol. 1
- **M. HENZE ; L. HERMERSCHMIDT ; D. KERPEN ; R. HÄUßLING ; B. RUMPE ; K. WEHRLE.** A Comprehensive Approach to Privacy in the Cloud-based Internet of Things. *Future Generation Computer Systems,* March 2016, vol. 56, 701-718
- **M. BARHAMGI ; D. BENSLIMANE ; S. OULMAKHZOUNE ; N. CUPPENS-BOULAHIA ; M. MRISSA ; H. TAKTAK.** Secure and Privacy-preserving Execution Mode or Data Services. *International Conference on Advanced Information Systems Engineering,* 2013
- **I. D. ADDO ; S. I. AHAMED ; S. S. YAU ; A. BUDURU.** Reference Architecture for Privacy Preservation in Cloud-Based IoT Applications. *IJSC,* October 2014, vol. 2 (4
- **JOHANNES HEURIX.** A taxonomy for privacy enhancing technologies. *Computers & Security,* September 2015, vol. 53, 1-17
- **YANNIS TZITZIKAS.** *Anastasia Analyti, Nicolas Spyratos, and Panos Constantopoulos,* 2004
- Information Modelling and Knowledge Bases. *13th European- Japanese Conference on Information Modelling and Knowledge Bases,* vol. XV, 67-87
- An algebra for enterprise privacy policies closed under composition and conjunction. **DOMINIK RAUB ; RAINER STEINWANDT.** Emerging Trends in Information and Communication Security. Springer, 2006, 130-144
- **LATANYA SWEENEY.** k-anonymity: A model for protecting privacy. *International Journal of Uncertainty, Fuzziness and Knowledge-Based Systems,* 2002, vol. 10 (05), 557-570

- Towards an information theoretic metric for anonymity. **ANDREI SERJANTOV ; GEORGE DANEZIS.** Privacy Enhancing Technologies. Springer, 2002, 41-53
- Structuring Anonymity Metrics. **SEBASTIAN CLAUß ; STEFAN SCHIFFNER.** Proceedings of the Second ACM Workshop on Digital Identity Management (DIM '06). ACM, 2006, 55-62
- **DAVID REBOLLO-MONEDERO ; JAVIER PARRA-ARNAU ; CLAUDIA DIAZ ; JORDI FORNÉ.** On the measurement of privacy as an attackers estimation error. *International Journal of Information Security,* 2013, vol. 12 (2), 129-149